Europäisches Patentamt

European Patent Office

Office européen des brevets

(19)

(11) EP 0 730 744 B1

(12) FASCICULE DE BREVET EUROPEEN

(45) Date de publication et mention
de la délivrance du brevet:
**22.12.1999 Bulletin 1999/51**

(21) Numéro de dépôt: **95932052.4**

(22) Date de dépôt: **25.09.1995**

(51) Int Cl.6: **G01V 1/36**

(86) Numéro de dépôt international:
**PCT/FR95/01231**

(87) Numéro de publication internationale:
**WO 96/09562 (28.03.1996 Gazette 1996/14)**

(54) **PROCEDE DE PROSPECTION SISMIQUE AVEC APPLICATION D'UN FILTRE D'ERREUR DE PREDICTION AUTO-DECONVOLUE**

SEISMISCHES PROSPEKTIONSVERFAHREN MIT ANWENDUNG EINES AUTODEKONVOLUTIEVES VORHERSAGEFEHLERFILTERS

SEISMIC PROSPECTION METHOD WITH APPLICATION OF A SELF-DECONVOLUTED PREDICTION ERROR FILTER

(84) Etats contractants désignés:
**FR GB NL**

(30) Priorité: **23.09.1994 FR 9411398**

(43) Date de publication de la demande:
**11.09.1996 Bulletin 1996/37**

(73) Titulaire: **COMPAGNIE GENERALE DE GEOPHYSIQUE**
**F-91300 Massy (FR)**

(72) Inventeur: **SOUBARAS, Robert**
**F-91400 Orsay (FR)**

(74) Mandataire: **Martin, Jean-Jacques et al**
**Cabinet REGIMBEAU**
**26, Avenue Kléber**
**75116 Paris (FR)**

(56) Documents cités:
**US-A- 4 630 242**          **US-A- 4 853 903**
**US-A- 5 182 729**

- **IEEE TRANSACTIONS ON GEOSCIENCE AND REMOTE SENSING, OCT. 1981, USA, vol. GE-19, no. 4, ISSN 0196-2892, pages 216-221, MAHALANABIS A K ET AL 'A fast optimal deconvolution algorithm for real seismic data using Kalman predictor model'**

**Description**

La présente invention concerne la prospection sismique, et notamment un procédé destiné à atténuer les bruits affectant les traces sismiques.

Le principe général de la prospection sismique consiste à provoquer, à l'aide d'une source sismique, un ébranlement dans le sous-sol et à enregistrer à l'aide de capteurs (géophones ou hydrophones) des données sismiques pour en tirer une information sur la géologie du sous-sol, en particulier détecter la présence d'hydrocarbures.

Les capteurs sont habituellement régulièrement espacés selon les noeuds d'une grille spatiale et les enregistrements y(t) en fonction du temps t des signaux recueillis par ces capteurs, encore appelés traces sismiques, sont regroupés et juxtaposés selon les valeurs de la coordonnée x (coordonnée spatiale) des capteurs sur la grille, pour former une section sismique t-x constituée de données sismiques y(t, x).

Les données sismiques comprennent une information utile (par exemple une succession d'échos en sismique réflexion) noyée dans un bruit de fond global que l'on cherche à éliminer par un traitement approprié, qui doit en outre tenir compte de la possibilité de traces manquantes sur la section sismique. En effet, il arrive dans la pratique qu'en certains points de la grille spatiale on ne dispose d'aucun enregistrement utilisable, soit parce que la mise en place d'un capteur en cet emplacement n'était pas possible en raison de la nature du terrain, soit à cause d'une défaillance de l'installation d'acquisition des données, ou soit encore parce que le signal délivré par un capteur a été saturé pendant l'enregistrement par un bruit très fort.

Le traitement des données sismiques, pour éliminer les bruits, peut s'effectuer dans un plan f-x sur des données Y(f,x) après transformée de Fourier des données sismiques initiales y(t,x) pour la variable temps t, ou dans un plan f-k sur des données Y(f,k) après transformée de Fourier des données Y(f,x) pour la variable spatiale x, où f désigne une variable fréquentielle et k une variable nombre d'onde.

On distingue habituellement les bruits présentant un caractère cohérent, qui sont engendrés en général par des phénomènes physiques identifiés tels qu'un certain mode de propagation des ondes sismiques (cas des ondes se propageant en surface par exemple) et que l'on souhaite éliminer parce que ne contenant aucune information utile sur le sous-sol, ou encore parce que l'extraction de l'information utile qu'ils contiennent serait trop complexe (cas des réflexions dites multiples), et les bruits présentant un caractère non cohérent, aléatoire, dont l'origine physique n'est en général pas identifiée (par exemple dûs à des phénomènes naturels tels que la houle ou les microséismes).

On a proposé de nombreux procédés pour traiter les données sismiques en vue d'atténuer les bruits, et ces procédés peuvent se classer dans plusieurs grandes catégories, selon qu'ils sont destinés plus particulièrement à éliminer des bruits ayant un caractère localisé ou non.

Dans un premier type de procédé, encore appelé procédé d'atténuation "déterministe", on se place classiquement dans le plan f-k et on espère que les bruits affectant les données sismiques Y(f,k) pourront être identifiés et localisés dans une région particulière de ce plan. A titre indicatif, un bruit se propageant avec une vitesse constante se traduit par une droite dans le plan f-k et pourra être éliminé par un simple filtrage portant sur la variable nombre d'onde k. Plus généralement, on traite les données dans le plan f-k en les multipliant par un filtre dit "projectif". valant en principe 0 dans les régions où le bruit est supposé présent (domaine affaibli du filtre) et 1 ailleurs (domaine passant du filtre). Une transition large doit toutefois être prévue entre les domaines passant et affaiblis du filtre pour limiter l'extension de ce dernier dans la section sismique t-x, sous peine d'être confronté à des effets de bord lorsque le filtre sort de la section sismique et que les données manquantes sont prises égales à zéro (ce qui revient à annuler certains coefficients du filtre et donc à en détériorer les performances). Les effets de bord sont particulièrement gênants dans le domaine spatial pour lequel le nombre d'échantillons, qui correspond au nombre de traces, est relativement faible. Le choix d'une transition large, qui correspond à une faible extension spatiale, conduit alors à un filtre insuffisamment sélectif, c'est-à-dire que pour atténuer un bruit donné dans le plan f-k on affaiblira également une partie non négligeable du signal utile qui se trouve à proximité. On a proposé, dans le brevet américain US-5 067 112, de remédier aux inconvénients du filtrage classiquement opéré dans le plan f-k en effectuant un filtrage par nombre d'onde dans le plan f-x. Le procédé décrit ne concerne cependant que le cas particulier où pour chaque fréquence du plan f-x il n'y a qu'un seul nombre d'onde $k_0$ à enlever, et d'autre part le filtre utilisé, non récursif, présente le double inconvénient d'être long à appliquer et de s'accompagner d'effets de bord lorsque l'on recherche une grande sélectivité en nombre d'onde.

Un second type de procédé, encore appelé procédé d'atténuation "statistique", s'applique au cas où l'on ne dispose pas d'informations sur la localisation du bruit dans la section sismique. On a proposé, dans l'article Expanded Abstracts of The 54th Annual SEG Meeting, Atlanta, Canales, L. L., 1984, Random Noise Reduction, d'effectuer un filtrage dit "prédictif' dans le plan f-x. Selon l'auteur de l'article précité, le bruit affectant une section sismique peut être isolé du reste des données sismiques en appliquant à ces dernières un filtre d'erreur de prédiction pour la variable spatiale x. Les coefficients de ce filtre sont choisis de façon à minimiser l'énergie du bruit résultant de l'application du filtre aux données. Le filtrage qui est proposé par Canales n'est pas de type projectif, car il n'annule pas les données supposées ne contenir que du bruit, et il ne peut valoir 1 sur une bande de fréquences donnée. Or, tout procédé d'atténuation des bruits préservant les signaux utiles devrait être de type projectif : lorsque les données ne contiennent que du bruit, elle doivent être multipliées par 0 pour être éliminées, et dans le cas contraire elles doivent être multipliées par 1 pour être conservées intactes. Dans le procédé proposé par Canales, les données sismiques subissent une dégradation importante.

Un troisième type de procédé, proposé notamment dans US 5,182,729 (Duren et al.) consiste à séparer un signal supposé parfaitement prédictible d'un bruit additif en utilisant une matrice de projection. Ce type de procédé est basé sur les considérations suivantes :

Soit N données sismiques y(0),...y(N), où N est un nombre entier, correspondant à la somme d'un signal $y_0(0),..,y_0(N)$ parfaitement prédictible et d'un bruit et e(0),..,e(N).

La prédictibilité de $y_0 = [y_0(0),y_0(1),..,y_0(N)]^T$ ($^T$ désignant l'opération de transposition matricielle) pour un filtre d'erreur de prédiction *a* à p+1 coefficient a(0), a(1),..,a(p) où p est un nombre entier inférieur à N, se traduit par le fait que $y_0$ appartient au sous-espace $Ay_0=0$, A étant la matrice à N+1 colonnes et N+1-p lignes :

$$A = \begin{bmatrix} a(p) & ... & a(0) & 0 & ... & ... & 0 \\ 0 & a(p) & ... & a(0) & 0 & ... & 0 \\ ... & ... & ... & ... & ... & ... & ... \\ 0 & ... & ... & 0 & a(p) & ... & a(0) \end{bmatrix} \qquad (I)$$

On peut alors estimer $y_0$ en projetant $[y(0),y(1),..,y(N)]^T$ sur ce sous-espace. Il est connu en algèbre linéaire que ceci s'écrit :

$$y_0 = (I-A^* (AA^*)^{-1}A)y \qquad (II)$$

$$e = A^* (AA^*)^{-1} Ay \qquad (III)$$

où I est la matrice unité, A* étant la matrice transposée conjuguée de A, e étant le bruit additif estimé.

L'inversion de la matrice AA* fait alors appel au calcul matriciel, ce qui limite très sérieusement l'intérêt pratique de ces procédés. Le coût en temps de calcul et en place mémoire d'une inversion de matrice de dimension égale à celle des données est en général prohibitif dans le cas du traitement sismique, qui traite des quantités énormes de données.

Dans le brevet Duren et al., il est appliqué une matrice de projection du type de celle de l'équation III. Ceci est viable dans la mesure où il considère un cas particulier où le nombre de données N est de 3 à 5.

L'invention vise à remédier aux inconvénients des procédés de l'art antérieur.

Elle n'utilise que des procédés de type filtrage sur les données, bien plus économique que les procédés de type matriciel.

Les procédés de type filtrage se distinguent des procédés de type matriciels par le critère suivant : dans les procédés de type matriciel, le calcul des coefficients de la matrice à appliquer aux données nécessite de connaître le nombre d'échantillons et de calculer et stocker pour chaque échantillon des données, un ensemble de coefficients. Les procédés de type filtrage se caractérisent par le fait qu'ils n'ont pas besoin de connaître le nombre d'échantillons de données au moment du calcul des coefficients. Les coefficients sont calculés une fois pour toute, pour toutes les données.

On comprendra que pour des traitements sismiques. dans lesquels on manipule une grande masse de données, les procédés de type filtrage sont particulièrement avantageux par rapport aux méthodes matricielles.

L'invention enseigne comment réaliser une projection approchée par filtrage.

Les filtrages souffrent en outre de l'inconvénient des effets de bords. C'est un autre enseignement de cette invention que de montrer comment s'en affranchir, sans augmenter le coût de calcul, en utilisant la structure de filtrage non-stationnaire.

Par filtrage on entend par conséquent dans tous le présent texte une opération consistant à calculer des échantillons de sortie à partir de combinaisons linéaires des échantillons d'entrée avec un ensemble de coefficients calculés préalablement et identiques pour les différents échantillons d'entrée.

Dans le cas où un échantillon de sortie est calculé à partir des échantillons d'entrée uniquement, on parle de filtrage non récursif.

Dans le cas où un échantillon de sortie est calculé à partir de combinaisons linéaires des échantillons d'entrée et des échantillons de sortie précédemment calculés, on parle de filtrage récursif.

Par filtrage non-stationnaire, on entend un filtrage dont les coefficients sont non stationnaires et recalculés à chaque fois pour les premiers échantillons d'entrée, jusqu'à converger sur des valeurs de coefficients utilisés ensuite de façon stationnaire pour les autres échantillons d'entrée. Le nombre d'ensembles de coefficients à calculer est supérieur à 1 mais reste petit et est de toute façon indépendant du nombre d'échantillons de données.

Par opération matricielle sur les données. on entend une opération consistant à calculer autant d'ensemble de coefficients qu'il y a d'échantillons dans les données.

L'invention propose quant à elle un procédé de prospection sismique dans lequel :

- on provoque un ébranlement sismique dans le sous-sol,
- on recueille à l'aide de capteurs des données sismiques échantillonnées $y= [y(0),..,y(N)]^T$, où N est un nombre entier, contenant un signal $y_o$ que l'on cherche à isoler noyé dans un bruit additif,
- on réalise dans le domaine temporel ou fréquentiel un filtrage des données sismiques, pour obtenir des données filtrées dans lesquelles le signal à isoler est absent,
- on soustrait aux données sismiques initiales les données filtrées pour obtenir des données traitées $y_o(0),...,y_o(N)$ correspondant au signal $y_0$ dépourvu de bruit additif,
- on traite les données ainsi acquises pour en déduire une information utile sur la géologie du sous-sol,

le filtre utilisé pour le filtrage des données sismiques étant un filtre fréquentiel d'erreur de prédiction autodéconvolué M(f) tel que :

$$M(f) = |A(f)|^2/R(f),$$

ou un filtre équivalent dans le domaine temporel,

A(f) étant le spectre d'un filtre *a* d'erreur de prédiction à p+1 coefficient a(0), ...,a(p), où p est un nombre entier inférieur à N, *a* étant préalablement choisi pour annuler au mieux par convolution le signal $y_0$ que l'on cherche à isoler,

R(f) étant une autocorrélation précolorisée de ce filtre de prédiction *a* vérifiant :

$$R(f) = |A(f)|^2 + \varepsilon^2 |B(f)|^2,$$

où $\varepsilon$ et B(f) sont respectivement un facteur et un filtre de précolorisation préalablement choisis en fonction de la sélectivité souhaitée pour le filtrage.

Comme on le comprendra par la suite, un tel filtrage est approximativement projectif.

En outre, le procédé permet de réaliser une atténuation "déterministe" avec un filtre sélectif sans rencontrer d'effets de bord et une atténuation "statistique" par filtrage de type projectif.

L'invention sera mieux comprise à la lecture de la description détaillée qui va suivre, d'exemples non limitatifs de mise en oeuvre du procédé selon l'invention. et à l'examen du dessin annexé sur lequel :

- la figure 1 illustre, sous une forme schématique, le procédé selon l'invention,
- la figure 2 représente l'évolution en fonction de la fréquence du module du spectre d'un filtre d'erreur de prédiction.
- la figure 3A représente le spectre du filtre d'erreur de prédiction auto-déconvolué correspondant à la figure 2, pour une valeur donnée d'un paramètre de calcul $\varepsilon$,
- la figure 3B illustre l'évolution du filtre d'erreur de prédiction auto-déconvolué représenté sur la figure 3A, pour une valeur différente du paramètre de calcul $\varepsilon$,
- la figure 4 représente une section sismique synthétique.
- la figure 5 représente la partie prédictible $y_o(t.x)$ des données sismiques y(t,x) représentées sur la section sismique de la figure 4, obtenue par la mise en oeuvre du procédé selon l'invention,
- la figure 6 représente la partie non prédictible e(t,x) des données sismiques y(t,x) représentées sur la section sismique de la figure 4, obtenue par la mise en oeuvre du procédé selon l'invention,
- la figure 7 représente la partie prédictible des données sismiques y(t,x) représentées sur la section sismique de la figure 4, obtenue par la mise en oeuvre d'un procédé selon l'art antérieur,
- la figure 8 représente la partie non prédictible des données sismiques y(t,x) représentées sur la section sismique de la figure 4, obtenue par la mise en oeuvre d'un procédé selon l'art antérieur,

- la figure 9 représente la section sismique de la figure 4 avec 10 traces manquantes,
- la figure 10 représente une section sismique restaurée par la mise en oeuvre du procédé selon l'invention,
- la figure 11 représente la partie prédictible des données sismiques restaurées de la figure 10, et
- la figure 12 représente la partie non prédictible des données sismiques restaurées de la figure 10.

Dans la description qui va suivre, on applique l'invention à des données sismiques y(t) fonction de la variable temps t. Les données sismiques y(t) sont supposées enregistrées sous forme numérique et discrétisées avec un pas d'échantillonnage $\Delta\tau = 1/f_e$, où $f_e$ est la fréquence d'échantillonnage. Dans la description qui suit, $\Delta\tau$ est pris égal à 1 pour simplifier les notations. On peut bien entendu appliquer de la même façon l'invention à des données sismiques y(x) fonction de la variable espace x.

L'invention permet, lorsqu'appliquée aux données y(t), d'isoler des signaux de bruit de fréquence telle que 50 Hz ou 60 Hz affectant les données sismiques, en vue de leur élimination, et lorsqu'appliquée aux données y(x), d'enlever des perturbations dues par exemple à la configuration spatiale des capteurs sur la grille.

La variable entière n est utilisée dans la suite de la description pour désigner les échantillons de données sismiques discrétisées. Lorsque l'invention est appliquée à des données sismiques fonction de la variable temps t, n est compris entre 0 et N, le nombre total d'échantillons enregistrés par un capteur pendant la durée de la mesure étant égal à N+1. Lorsque l'invention est appliquée dans la section sismique t-x ou le plan f-x considéré à des données sismiques fonction de la variable espace x, n est compris entre 0 et le nombre total moins un de traces juxtaposées dans la section sismique t-x considérée.

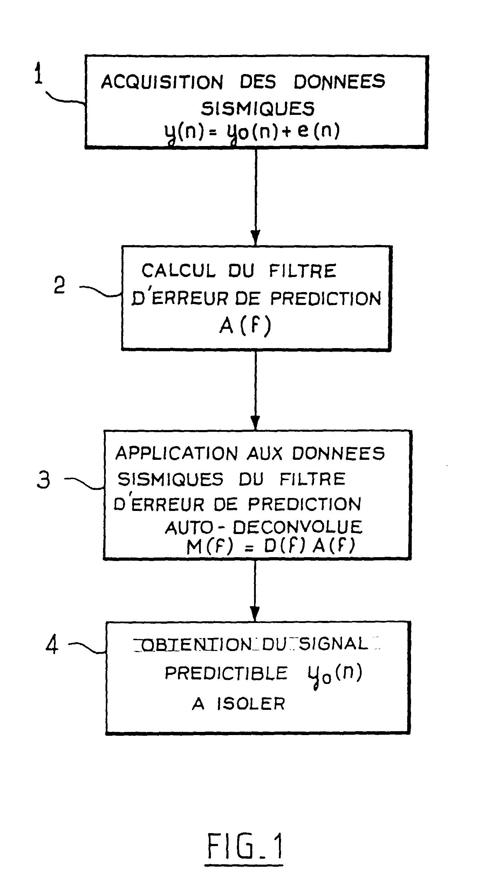

On considère, de façon générale, dans l'exposé qui suit, que l'on dispose de données sismiques discrétisées y(n) extraites d'une section sismique obtenue de façon connue en soi (étape 1 sur la figure 1), pouvant se décomposer en une composante prédictible $y_o(n)$ que l'on cherche à isoler et une composante non prédictible e(n) :

$$y(n) = y_o(n) + e(n) \qquad\qquad (1)$$

Conformément à l'invention, on calcule un filtre d'erreur de prédiction *a* de longueur p, c'est-à-dire ayant p+1 coefficients, annulant au mieux $y_0(n)$ (étape 2 sur la figure 1). On considère ici, pour faciliter la compréhension de l'invention, que le filtre d'erreur de prédiction *a* annule complètement $y_o(n)$, c'est-à-dire que les p+1 coefficients a(0), a(1), ..., a(p) du filtre *a* sont tels que :

$$a(0)\, y_o(n) + a(1)\, y_o(n-1) + ... + a(p)\, y_o(n-p) = 0, \text{ avec } a(0) = 1 \qquad\qquad (2)$$

Dans le domaine fréquentiel, obtenu en prenant la transformée de Fourier de y(n) pour la variable temps, par exemple par une méthode de transformée de Fourier rapide réalisant l'opération

$$Y(m') = \sum_{m=0}^{M-1} y(m)e^{2j\pi\, mm'/M} \qquad m' = 0,....,M\text{-}1$$

où M est un entier choisi supérieur aux nombres d'échantillons temporels du signal,
les équations (1) et (2) s'écrivent. en utilisant des lettres majuscules pour désigner e(n) et $y_o(n)$ après transformée de Fourier :

$$Y(f) = Y_o(f) + E(f) \qquad\qquad (1')$$

$$A(f)\, Y_o(f) = 0 \qquad\qquad (2')$$

où A(f) est le spectre du filtre d'erreur de prédiction *a*.

On déduit de (1') et (2')

$$A(f)\,E(f) = A(f)\,Y(f) \qquad\qquad (3')$$

Soit D(f) un opérateur de déconvolution pour A(f).

On applique aux données Y(f), conformément à l'invention, le filtre d'erreur de prédiction auto-déconvolué D(f) A(f) (étape 3 sur la figure 1) et l'on obtient :

$$E(f) = D(f)\,A(f)\,Y(f). \qquad\qquad (4')$$

On peut ensuite (étape 4 sur la figure 1) isoler le signal utile $Y_o(f)$ par $Y_o(f) = Y(f) - E(f)$

Dans la pratique, le filtre d'erreur de prédiction $a$ n'est jamais rigoureusement inversible et l'on ne peut trouver un opérateur de déconvolution D(f) tel que D(f) A(f) = 1 ; l'opérateur de déconvolution D(f) est donc dans la pratique un opérateur inverse approché, déterminé par exemple en minimisant :

$$|D(f)A(f) - 1|^2 + \varepsilon^2\,|B(f)|^2\,|D(f)|^2$$

Cette expression est minimale pour

$$D(f) = \overline{A(f)}/R(f) \qquad\qquad (5')$$

avec

$$R(f) = |A(f)|^2 + \varepsilon^2\,|B(f)|^2 \qquad\qquad (6')$$

Dans cette expression, $\overline{\phantom{xxx}}$ désigne le complexe conjugué, $\varepsilon$ et B(f) contrôlent le calcul et sont choisis par l'homme du métier en fonction de la marge d'erreur que l'on s'autorise dans le calcul de D(f). $\varepsilon$ est un scalaire appelé "facteur de précolorisation", B(f) est un filtrc appelé "filtre de précolorisation". Dans le domaine temporel, le filtre de précolorisation b est de longueur finie q. préférentiellement inférieure à p, avec pour coefficients b(0), ..., b(q) et b(0)=1. Lorsque B(f) = 1, $\varepsilon$ est appelé "facteur de préblanchiment".

L'équation (4') s'écrit encore :

$$E(f) = M(f)\,Y(f) \qquad\qquad (7')$$

avec

$$M(f) = |A(f)|^2 / [|A(f)|^2 + \varepsilon^2\,|B(f)|^2] \qquad\qquad (8')$$

soit

$$M(f) = |A(f)|^2 / R(f) \qquad\qquad (9')$$

R(f) est un filtre appelé "autocorrélation précolorisée" du filtre d'erreur de prédiction $a$.

Ainsi, le filtre M(f) obtenu et appliqué conformément à l'invention aux données sismiques Y(f) est analogue à un filtre de type projectif, car :

$$M(f) = 0 \text{ si } A(f) = 0$$

$$M(f) \approx 1 \text{ si } |A(f)| \gg \varepsilon\,|B(f)|$$

Le calcul du filtre d'erreur de prédiction auto-déconvolué M(f) à appliquer aux données sismiques nécessite la connaissance du filtre d'erreur de prédiction A(f) et de l'autocorrélation précolorisée R(f) d'après l'équation (9'). Après avoir calculé le filtre d'erreur de prédiction $a$ et l'autocorrélation précolorisée, le filtre M(f) à appliquer aux données dans le domaine fréquentiel résulte de la même équation (9'). Il sera détaillé plus loin comment l'appliquer dans le domaine temporel.

On rappelle, que de façon connue en soi par l'homme du métier, la convolution de deux séquences x(M1), ..., x(M2) et y(N1), ..., y(N2) est la séquence z(M1+N1), ...., z(M2+N2) telle que :

$$z(i) = \sum_{j} x(j)\ y(i\text{-}j)$$

Nous utiliserons par la suite la notation:

$$z(i)=x(i)^\star y(i)$$

pour désigner cette opération de convolution.

On désignera l'opération de corrélation qui est la convolution de la séquence x(i) avec la séquence retournée conjuguée yr(i) telle que:

$$yr(i)=\overline{y(\text{-}i)} \qquad \text{pour } i = \text{-}N2, ..., \text{-}N1$$

par la notation :

$$z(i)=x(i)^\star\overline{y(\text{-}i)}$$

$\delta(i)$ dénotera par la suite une séquence telle que
$\delta(0)=1$ et $\delta(i)=0$ si i est différent de 0.

<u>CALCUL DETERMINISTE DU FILTRE D'ERREUR DE PREDICTION ET DE L'AUTOCORRELATION PRECOLO-RISEE</u>

Dans une première mise en oeuvre du procédé selon l'invention, les p+1 coefficients du filtre d'erreur de prédiction $a$ sont calculés à partir de paramètres physiques connus du signal $y_o$ que l'on cherche à isoler. et de préférence, les p+1 coefficients du filtre d'erreur de prédiction $a$ sont calculés à partir du support du spectre fréquenticl $Y_o(f)$ du signal $y_o$ (ensemble des valeurs de f pour lesquelles $Y_o(f) \neq 0$).

Le filtre d'erreur de prédiction $a$ peut être calculé de plusieurs façons, lorsque l'on connaît le support du spectre du signal prédictible $y_o$ que l'on désire isoler des données sismiques y(n), ce qui est le cas par exemple lorsque l'on désire éliminer des données sismiques le bruit de fréquence 50 Hz ou 60 Hz dû aux installations électriques. On traduit dans l'invention, en ce qui concerne le filtrage déterministe, l'hypothèse qu'un signal est à bande limitée en terme de quasi-prédictibilité de ce signal.

<u>Signal $y_o$ présentant un spectre de raies isolées</u>

- Dans cet exemple, le signal $y_o$ à isoler dans les données sismiques y(n) est supposé présenter un spectre $Y_o(f)$ constitué de p raies $f_q$ (q = 1, ..., p).

On définit, pour chaque raie de fréquence $f_q$, un filtre d'erreur de prédiction élémentaire $a_q$ de longueur 1, à deux coefficients $a_q(0)$ et $a_q(1)$ égaux à :

$$a_q(0) = 1$$

$$a_q(1) = -e^{-2j\pi f_q}$$

Les coefficients a(0), a(1), ..., a(p) du filtre d'erreur de prédiction global *a* à appliquer aux données sismiques y(n) sont alors définis par :

$$a(i) = a_1(i) * a_2(i) * ... * a_p(i)$$

De même, on calcule pour chaque entier q l'autocorrélation précolorisée $r_q$ avec préblanchiment, de longueur 2, à trois coefficients :

$$i = -1, 0, 1 \quad r_q(i) = a_q(i)* \overline{a_q(-i)} + \varepsilon^2 \delta(i)$$

puis on calcule

$$r(i) = r_1(i)*r_2(i)*...*r_p(i)$$

a(i) et r(i) permettent, après transformée de Fourier, de construire un filtre M(f) d'après l'équation (9') qui rejette les p fréquences $f_q$. $\varepsilon$ contrôle la sélectivité du filtre ; plus $\varepsilon$ est petit, plus le filtre est sélectif.

Signal $\underline{y_o}$ présentant un spectre $\underline{Y_o}$(f) non nul pour au moins un intervalle de fréquences

- Dans cet exemple, le signal $y_o$ à isoler est supposé présenter un spectre $Y_o$(f) non nul pour au moins un intervalle de fréquences.

Méthode par moindres carrés

- Dans cette première méthode on détermine les coefficients a(0), a(1), ..., a(p) du filtre d'erreur de prédiction *a*. de spectre A(f), par une méthode des moindres carrés, c'est-à-dire qu'on les choisit tels que l'intégrale $\int_0^1$ W(f) IA(f) I² df soit minimum, sachant que a(0) = 1 et que W(f) est une fonction qui vaut 1 lorsque la fréquence f est dans un intervalle de fréquences où le spectre $Y_o$(0 du signal $y_o$ à isoler est non nul, et 0 ailleurs.

Minimiser l'intégrale définie plus haut revient à résoudre, dans le domaine temporel, après transformée de Fourier inverse de W(f) pour obtenir w(i) dans le domaine temporel, de façon connue de l'homme du métier, un système de Toeplitz formé à l'aide de w(-p),...,w(p), par exemple au moyen d'un algorithme de Levinson sans second membre.
La matrice de Toeplitz M de coefficients m(i,j) se calcule par :

$$m(i,j) = w(i-j) \text{ pour } i,j = 0, ..., p$$

et on résout, de façon connue en soi

$$\sum_{j=0}^{p} m(i,j) \ a(j) = \sigma^2 \ \delta(i)$$

avec $a(0) = 1$, $\sigma$ un scalaire.

Il est préférable, pour le calcul de l'autocorrélation précolorisée par l'équation (6'), d'utiliser $B(f)=1$ et un facteur de préblanchiment $\varepsilon$ qui soit grand devant les valeurs du module $|A(f)|$ dans lesdits intervalles de fréquences.

Méthode avec polynômes de Chebychev

- En variante, et préférentiellement dans le cas où le procédé selon l'invention est appliqué au traitement de données sismiques $y(t)$ ou $y(x)$ ne dépendant que de la seule variable temps t ou espace x. on décompose dans une deuxième méthode le support du spectre $Y_o(f)$ en Q intervalles de fréquence :

$$[f_q - \Delta f_q, f_q + \Delta f_q]$$

$\Delta f_q$ étant la demi-largeur du sous-intervalle centré sur la fréquence $f_q$.

On définit les Q fonctions

$$S_q(f) = e^{-j\pi pf} T_{pq}[\sin(\pi(f-f_q)) / \sin(\pi \Delta f_q)]$$

où $T_{pq}$ est le polynôme de Chebychev de première espèce et d'ordre $p_q$, défini récursivement pour une variable $\alpha$ par :

$$T_o(\alpha) = 1, T_1(\alpha) = \alpha, T_p(\alpha) = 2\alpha T_{p-1}(\alpha) - T_{p-2}(\alpha)$$

On peut vérifier que :

$$S_q(f) = \sum_{m=0}^{p_q} s_q(m) \, e^{-j2\pi mf}$$

C'est-à-dire qu'après transformée de Fourier inverse de $S_q(f)$, on obtient dans le domaine temporel, le signal $s_q(i)$ dont les seuls coefficients non nuls sont $s_q(0)$, ..., $s_q(p_q)$.

On calcule ensuite des coefficients de filtres d'erreur de prédiction élémentaires $a_q$ (après avoir posé $\lambda_q = 1/s_q(0)$) par :

$$a_q(i) = s_q(i) \lambda_q \qquad \text{pour } i = 0, ..., p_q$$

et le filtre d'erreur de prédiction $a$ par :

$$a(i) = a_1(i) * a_2(i) * ... * a_Q(i)$$

On calcule les autocorrélations précolorisées élémentaires

$$r_q(i), \text{ avec } \varepsilon_q >> \lambda_q$$

par :

$$r_q(i) = a_q(i) * \overline{a_q(-i)} + \varepsilon^2 \delta(i),$$

puis l'autocorrélation précolorisée r(i) par :

$$r(i) = r_1(i) * r_2(i) * ... * r_Q(i).$$

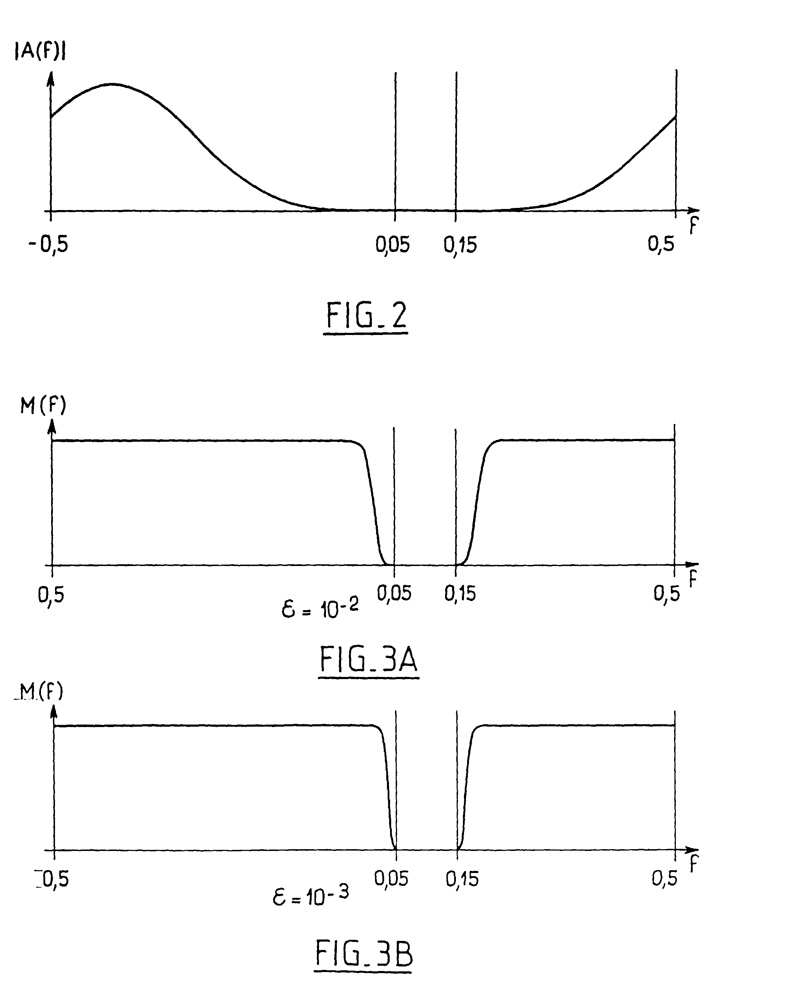

On a tracé sur la figure 2 le module IA(f)I du spectre A(f) en fonction de la fréquence, pour $Y_o(f)$ de support centré sur $f_1 = 1/10$ avec $\Delta f_1 = 1/20$. On remarquera que le filtre d'erreur de prédiction *a* obtenu présente un spectre de module IA(f)I petit dans l'intervalle de fréquence du support du spectre $Y_o(f)$.

On a respectivement tracé sur les figures 3A et 3B le spectre M(f) pour deux valeurs du facteur de préblanchiment $\varepsilon$ respectivement égales à $10^{-2}$ et $10^{-3}$. On remarquera que le paramètre $\varepsilon$ permet de contrôler la pente du filtre M(f).

On décrira plus loin comment calculer de façon "statistiquc". conformément à l'invention, le filtre d'erreur de prédiction *a* lorsque le signal prédictible $y_o$ à isoler n'est pas connu ou identifiable a priori parmi les données sismiques.

On va exposer dans ce qui suit différentes manières d'appliquer, conformément à l'invention. le filtre d'erreur de prédiction auto-déconvolué aux données sismiques.

APPLICATION AUX DONNEES SISMIQUES DU FILTRE D'ERREUR DE PREDICTION AUTO-DECONVOLUE

Processus de filtrage fréquentiel

- Une première façon d'appliquer le filtre d'erreur de prédiction auto-déconvolué aux données sismiques consiste à appliquer directement aux données sismiques, dans le domaine fréquentiel, le filtre M(f) tel que défini précédemment par l'équation (9').

Processus de filtrage temporel non récursif

- Une deuxième façon d'appliquer le filtre d'erreur de prédiction auto-déconvolué consiste à effectuer un filtrage temporel non récursif.

L'autocorrélation précolorisée $R(f) = IA(f)I^2 + \varepsilon^2 IB(f)I^2$ dans le domaine fréquentiel a pour équivalent dans le domaine temporel, en écriture symbolique :

$$r(i) = a(i) * \overline{a(-i)} + \varepsilon^2 b(i) * \overline{b(-i)} \qquad (10)$$

De préférence, pour ne pas alourdir le temps de calcul, la longueur du filtre de précolorisation b(i) est choisie inférieure à la longueur de *a,* de sorte que l'ensemble des indices pour lesquels r(i) est non nul est limité à -p. ..., 0, ..., p.

Après avoir calculé l'autocorrélation précolorisée r(i), on calcule l'équivalent g(i) dans le domaine temporel de G(f) qui vérifie $R(f) = 1/ IG(f)I^2$. par résolution d'un système de Toeplitz formé à partir de l'autocorrélation précolorisée r(i), à l'aide d'un algorithme de Levinson par exemple : on calcule la matrice M présentant une forme dite de Toeplitz, définie par ses coefficients m(i,j), égaux à :

$$m(i,j) = r(i-j) \text{ pour } i, j = 0, ..., L_g$$

$$\text{vérifiant} \sum_{j=0}^{L_g} m(i,j)\, g(j) = \delta(i)$$

avec $\delta(0) = 1$ et $\delta(i) = 0$ pour $i = 1, ..., L_g$ et $L_g$ choisi pour obtenir la convergence souhaitée de $1 / |G(f)|^2$ vers $R(f)$.

On calcule ensuite

$$e(n) = \overline{a(-i)} * \overline{g(-i)} * g(i) * a(i) * y(n) \tag{11}$$

On peut résumer le processus de filtrage temporel non récursif de la façon suivante (processus N° 1) :

1) Calcul de $r(i)$, autocorrélation précolorisée de $a(i)$ :

$$r(i) = a(i) * \overline{a(-i)} + \varepsilon^2 b(i) * \overline{b(-i)}$$

2) Calcul de $g(i)$ à partir de $r(i)$, $g(i)$ étant tel que $r(i) * g(i) * \overline{g(-i)} \approx \delta(i)$, avec $\delta(i) = 1$, si $i = 0$ et $\delta(i) = 0$ sinon

3) Calcul de $e(n) = \overline{a(-i)} * \overline{g(-i)} * g(i) * a(i) * y(n)$

On calcule ensuite le signal à isoler $y_o(n) = y(n) - e(n)$.

$g(i)$ a une longueur $L_g + 1$ qui peut être grande si $\varepsilon$ est petit. Dans ce cas, l'application de $g(i)$ aux données sismiques est coûteuse en temps de calcul.

Processus de filtrage temporel récursif

Pour remédier à cela, on peut factoriser l'autocorrelation précolorisée $R(f)$, qui est de longueur finie, en écrivant l'autocorrélation $r(i)$ de longueur temporelle p comme l'autocorrélation d'un signal $c(i)$ de longueur p et à phase minimale.

- Une troisième façon d'appliquer le filtre d'erreur de prédiction auto-déconvolué consiste alors à effectuer un filtrage temporel récursif, qui présente l'avantage, comme expliqué plus haut, de nécessiter un temps de calcul moindre que le filtrage temporel non récursif.

On cherche le filtre, de coefficients $c(i)$ ($i = 0, ..., p$) et appelé pour la suite "filtre d'erreur de prédiction amorti", tel que, en écriture symbolique on ait :

$$r(i) = a(i) * \overline{a(-i)} + \varepsilon^2 b(i) * \overline{b(-i)} \approx c(i) * \overline{c(-i)} \tag{12}$$

qui est la traduction dans le domaine temporel de l'équation (6') dans le domaine fréquentiel :

$$R(f) = |A(f)|^2 + \varepsilon^2 |B(f)|^2 = |C(f)|^2$$

On détermine de préférence les coefficients $c(i)$ par le processus itératif de filtrage temporel récursif suivant (processus N° 2) (on pourra se reporter à l'article de Kunetz, G. "Généralisation des opérateurs d'anti-résonance à un nombre quelconque de réflecteurs" Geophysical Prospectory, vol. 12, pp. 283-289) :

1) initialisation de variables de calcul ep et em

$$ep(0, i) = r(i) \qquad \text{pour } i = 0, ..., p$$

$$ep(0, i) = r(i) \qquad \text{pour } i = 0, ..., p$$

$$em(0, i) = r(i+1) \qquad \text{pour } i = 0, ..., p-1$$

$$em(0, p) = 0$$

2) <u>itérations</u>

Pour j allant de 0 à L, où L est le nombre d'itérations que l'on se fixe :

$$\kappa(j) = - em(j, 0) / ep(j, 0)$$

$$ep(j+1,i) = ep(j, i) - \overline{\kappa(j)}\ em(j, i) \qquad \text{pour } i = 0, ..., p$$

$$em(j+1, i) = em(j, i+1) - \kappa(j)\ ep(j, i+1) \qquad \text{pour } i = 0, ..., p-1$$

$$em(j+1, p) = 0$$

Fin de boucle en j.
On remarquera que les $\kappa(j)$ sont calculés de sorte que

$$em(j+1,-1) = 0$$

3) <u>normalisation</u>

On calcule ensuite c(i) par

$$c(i) = ep(L, i) / \sqrt{ep(L, 0)} \qquad \text{pour } i = 0, ..., p$$

On choisit L pour avoir la précision recherchée dans la relation asymptotique $r(i) = c(i) * \overline{c(-i)}$.
On calcule, connaissant c(i) et a(i), u(n), pour n variant de 0 à N, par

$$u(n) = [\sum_{i=0}^{p} a(i)\ y(n-i) - \sum_{i=1}^{p} c(i)\ u(n-i)]\ /\ c(0) \qquad (13)$$

puis, connaissant u(n), on calcule pour n variant de N à 0, e(n) par

$$e(n) = [\sum_{i=0}^{p} \overline{a(i)}\ u(n+i) - \sum_{i=1}^{p} \overline{c(i)}\ e(n+i)]\ /\ \overline{c(0)} \qquad (14)$$

u(n) s'obtient ci-dessus par un filtrage dit "récursif ascendant" que l'on écrira par la suite en écriture symbolique :

$$u(n) = \left[\frac{a(i)}{c(i)}\right] * y(n)$$

e(n) s'obtient ci-dessus par un filtrage dit "récursif descendant" que l'on écrira par la suite en écriture symbolique :

$$e(n) = \left[\frac{\overline{a(-i)}}{\overline{c(-i)}}\right] \ast u(n)$$

On utilisera aussi par la suite la notation

$$u(n) = \left[\frac{y(n)}{c(i)}\right]$$

pour désigner l'opération

$$u(n) = \left[\frac{\delta(i)}{c(i)}\right] \ast y(n)$$

L'homme du métier notera que c(i) est à phase minimale et $\overline{c(-i)}$ à phase maximale, ce qui permet d'obtenir des filtrages récursifs respectivement ascendant et descendant stables.

On peut résumer le processus de filtrage temporel non récursif de la façon suivante (processus N° 3) :

1) Calcul de r(i), autocorrélation précolorisée de a(i), par

$$r(i) = a(i) \ast \overline{a(-i)} + \varepsilon^2 b(i) \ast \overline{b(-i)}$$

2) Calcul du filtre d'erreur de prédiction amorti c(i) (i = 0, ..., p) vérifiant

$$c(i) \ast \overline{c(-i)} \approx r(i)$$

3) Calcul de u(n) par filtrage récursif ascendant

$$u(n) = \left[\sum_{i=0}^{p} a(i)\, y(n-i) - \sum_{i=1}^{p} c(i)\, u(n-i)\right] / c(0)$$

4) Calcul de e(n) par filtrage récursif descendant

$$e(n) = \left[\sum_{i=0}^{p} \overline{a(i)}\, u(n+i) - \sum_{i=1}^{p} \overline{c(i)}\, e(n+i)\right] / \overline{c(0)}$$

Le signal à isoler $y_o(n)$ est ensuite calculé par $y_o(n) = y(n) - e(n)$.

Processus de filtrage récursif non stationnaire

- Une quatrième façon pour appliquer le filtre d'erreur de prédiction auto-déconvolué, conformément à l'invention, consiste à effectuer un filtrage que nous appellerons "récursif non stationnaire", qui présente l'avantage de réduire les effets de bord.

La quasi-prédictibilité de $y_o$ peut s'écrire, sous forme matricielle :

$$Ae + \varepsilon B\rho = A\,y, \qquad (15)$$

où A et B sont des matrices construites à partir des filtres *a* et *b* et $\rho$ est un vecteur de calcul dit "vecteur d'innovation", précolorisé par B et multiplié par le facteur de précolorisation $\varepsilon$. Si $\varepsilon$ est nul, $y_o$ est parfaitement prédictible.

En explicitant l'équation matricielle (15) on a :

$$
\begin{vmatrix}
a(p)\ldots a(0)0 & & 0\ldots 0 \\
0 & a(p)\ldots a(0) & 0\ldots 0 \\
& \ldots & \\
0 & 0 & 0\ldots a(p)\ldots a(0)
\end{vmatrix}
\begin{vmatrix}
e(0) \\
e(1) \\
\\
\\
e(N)
\end{vmatrix}
+\varepsilon
\begin{vmatrix}
b(q)\ldots b(0)\,0\,\ldots & 0 \\
0 & b(q)\ldots b(0)\,0 \\
\ldots & \ldots \\
0 & 0\ \ b(q)\ldots b(0)
\end{vmatrix}
\begin{vmatrix}
\rho(0) \\
\rho(1) \\
\\
\\
\rho(N)
\end{vmatrix}
=
\begin{vmatrix}
a(p)\ldots a(0) & 0 & 0 \\
& & \\
& \ldots & \\
0 & 0\ a(p)\ldots a(0)
\end{vmatrix}
\begin{vmatrix}
y(0) \\
y(1) \\
\\
\\
y(N)
\end{vmatrix}
$$

On cherche e et $\rho$ minimisant

$$\beta = e^* e + \rho^* \rho$$

où * désigne le transposé conjugué d'une matrice ou d'un vecteur.

$\beta$ est minimum pour

$$e \text{ pris égal à } e_{min} = A^* (A\,A^* + \varepsilon^2 B\,B^*)^{-1} Ay$$

et

$$\rho \text{ pris égal à } \rho_{min} = \varepsilon\, B^* (A\,A^* + \varepsilon^2 B\,B^*)^{-1} Ay$$

$\beta$ vaut alors

$$\beta_{min} = e_{min}{}^* e_{min} + \rho_{min}{}^* \rho_{min}$$

soit, en explicitant les valeurs de $e_{min}$ et $\rho_{min}$ :

$$\beta_{min} = y^* A^* (A\,A^* + \varepsilon^2 B\,B^*)^{-1} Ay$$

Posons s = Ay qui est le résultat de la convolution de y par A
et

$$v = R^{-1}s,$$

avec

$$R = A\,A^* + \varepsilon^2 B\,B^*$$

Pour trouver v tel que Rv = s, l'homme du métier remarquera qu'il s'agit de la résolution d'un système linéaire, R étant une matrice de Toeplitz complexe p-bande formée à partir de l'autocorrélation de a(i) plus $\varepsilon^2$ fois celle de b(i). Une façon pour trouver v consiste à adopter la décomposition de Cholesky pour R :

R = C C* (C étant une matrice triangulaire p-bande inférieure).

Mais ceci est une opération matricielle sur les données. En effet, la dimension de R est N+1-p, donc de l'ordre de N qui est la dimension des données. Mais une des caractéristiques de l'invention est de constater que l'addition de la précolorisation permet d'approximer une opération matricielle sur les données par un filtrage non-stationnaire pour les premiers points d'applications. Cette structure de filtrage non-stationnaire permet de concilier le faible coût du filtrage et l'absence d'effets de bords.

L'implémentation de cette structure de filtrage non stationnaire dans le cadre de la décomposition de Choleski consiste à arrêter la décomposition au bout du calcul des L premières colonnes de la matrice C, celle-ci étant fictivement complétée par $c_{i+j \, . \, j} = c_{i+L \, . \, L}$ pour j > L et i=0,..p. Nous appellerons décomposition de Choleski partielle ce procédé.

Ce nombre L d'étapes au bout duquel le calcul peut être arrêté avec une erreur acceptable dépend du facteur de précolorisation et en aucun cas du nombre d'échantillons de données N. L peut être choisi d'autant plus petit que le facteur de précolorisation est grand.

On peut noter à ce propos qu'il est l'usage en calcul numérique de rajouter un petit facteur sur la diagonale d'une matrice positive de l'ordre de la précision numérique du calculateur employé ($10^{-6}$ en général) pour garantir la stabilité numérique de la décomposition de Choleski. l'autocorrélation de précolorisation utilisée dans la méthode proposée est d'un ordre de grandeur différent, de l'ordre de $10^{-2}$ à $10^{-1}$, et vise à rendre possible l'utilisation de la structure de filtrage non-stationnaire pour approximer l'inverse de la matrice à l'aide d'un petit nombre d'ensembles de coefficients.

En variante et préférentiellement. on ne calcule pas les coefficients du filtre non-stationnaire par la décomposition de Choleski partielle, mais on calcule des coefficients ep(i, j) par une méthode que l'on appellera par la suite calcul du filtre d'erreur de prédiction amorti non-stationnaire (processus N° 5), les coefficients ep(i,j) étant reliés aux $c_{i,j}$ par la relation $c_{i,j}=ep(j,i-j)/\sqrt{ep(j,0)}$, et les coefficients em(i,j) étant des variables internes du processus.

Initialisation

$$ep(0, i) = r(i) \qquad \text{pour } i = 0, ..., p$$

$$em(0, i) = r(i+1) \qquad \text{pour } i = 0, ..., p-1$$

$$em(0,p) = 0$$

Itérations

Pour j allant de 0 à L, où L inférieur ou égal à N est le nombre d'itérations que l'on se fixe pour obtenir la convergence des ep(j, i) quel que soit i :

$$\kappa(j) = - \, em(j, 0) / ep(j, 0)$$

$$ep(j+1, i) = ep(j, i) - \overline{\kappa(j)} \, em(j, i) \qquad \text{pour } i = 0, ..., p$$

$$em(j+1, i) = em(j, i+1) - \kappa(j) \, ep(j, i+1) \qquad \text{pour } i = 0, ..., p-1$$

$$em(j+1, p) = 0$$

Fin de boucle en j.

On remarquera que les $\kappa(j)$ sont calculés de sorte que

$$\text{em } (j+1, -1) = 0$$

Normalisation

Pour j allant de 0 à L,

$$\xi = 1/\sqrt{} \ ep(j, 0)$$

$$ep(j, i) = \xi \ . \ ep(j, i) \qquad i = 0, \ ..., \ p$$

Fin de boucle en j.

On complète ensuite fictivement les ep par ep(j,i) = ep(L,i) pour j=L+1, ..., N et i=0,..,p.

Par compléter fictivement, nous entendons que, lorsque par la suite la notation ep(j,i) apparaîtra, il faudra la remplacer par ep(L.i) si j est supérieur à L. Il est bien entendu que nous n'avons pas, lors de l'implantation du procédé sur un calculateur, à prévoir un espace mémoire pour stocker les ep(j,i) pour j>L. ni d'ailleurs les $c_{i,j}$ fictivement complété dans le processus précédent. Ceci montre bien que les processus N° 4 et N° 5 que nous venons de décrire sont bien des filtrages non stationnaires et non des calculs matriciels sur les données.

Le processus N°2 de calcul du prédicteur amorti c(i) revient à prendre:

$$c(i)=ep(L,i)$$

En conséquence, ep(j,i) peut être considéré comme un filtre d'erreur de prédiction amorti non-stationnaire.

Le filtrage récursif non stationnaire préféré comporte en résumé les étapes suivantes (processus N° 6):

1) Calcul de l'autocorrélation précolorisée

$$r(i) = a(i) * \overline{a(-i)} + \varepsilon^2 \ b(i) * \overline{b(-i)}$$

2) Calcul d'après le processus N° 5 à partir de r(i) du filtre d'erreur de prédiction amorti non-stationnaire ep(0, ..., L ; 0, ..., p) complété fictivement à ep(0, ..., N ; 0, ..., p)

3) Calcul de

$$s(n\text{-}p) \ = \ \sum_{i=0}^{p} \ a(i) \ \ y(n\text{-}i) \qquad\qquad n = p, \ ..., \ N$$

4) Calcul de

$$u(n) = \left[ s(n) - \sum_{i=1}^{i=min(p,n)} ep(n\text{-}i, \ i) \ u(n\text{-}i) \right] \ / \ ep(n, \ 0)$$

$$pour \quad n = 0, \ ..., \ N\text{-}p$$

5 ) Calcul de

$$v(n) = \left[ u(n) - \sum_{i=0}^{i=\min(p,N-p-n)} \overline{ep(n,\ i)}\ \overline{v(n+i)} \right] / \overline{ep(n,\ 0)}$$

$$pour \quad n = N\text{-}p,\ ...,\ 0$$

6) Calcul de

$$e(n+p) = \sum_{i=\max(0,-n)}^{i=\min(p,N-p-n)} a(i)\ \overline{v(n+i)}$$

$$pour \quad n = \text{-}p,\ ...,\ N\text{-}p$$

Dans la suite, on utilisera symboliquement la même écriture $u = C^{-1}s$ pour désigner le calcul de u à partir de s par une méthode filtrage non-stationnaire, indépendamment de la méthode utilisée, que ce soit la décomposition de Choleski partielle (processus N° 4) ou la méthode préférentielle du processus N° 5 et de l'étape 4) du processus N° 6 ci-dessus. ou tout autre méthode comprenant l'étape de choix d'un nombre L d'itérations au-delà de laquelle l'approximation stationnaire est faite. En particulier, le procédé de filtrage non récursif (procédé N° 1) peut être lui aussi généralisé en un procédé de filtrage non récursif non stationnaire.En effet, l'algorithme de Levinson appliqué pour un nombre d'itérations égal au nombre d'échantillons des données permet de calculer une matrice G telle que : $R^{-1} \approx G^*G$, ce qui permet d'écrire :

$$e = A^*G^* \, GAy \tag{4}$$

Ceci est une opération matricielle sur les données. L'enseignement de l'invention permet d'approximer cette opération par un filtrage non stationnaire en arrêtant l'algorithme de Levinson au bout de L itérations et en complétant fictivement la matrice G.

L'écriture calcul du filtre récursif non stationnaire C tel que $CC^* \approx R$ et application de ce filtre par $u = C^{-1}s$ pourra donc aussi être comprise comme le calcul du filtre non récursif non stationnaire G tel que $G^*G \approx R^{-1}$ et application de ce filtre par $u = Gs$.

De même on utilisera symboliquement l'écriture $v = C^{*-1}\,u$, pour désigner le calcul de v à partir de u, indépendamment de la méthode utilisée (par exemple étape 5) du processus N° 4, mais de façon préférentielle par l'étape 5) du processus N° 6).

Dans le cas où le filtre d'erreur de prédiction $a$ n'est pas calculé de façon déterministe, à partir du spectre $Y_0$ (f) du signal $y_0$ on calcule $a$ par itérations, de façon dite "statistique".

## CALCUL STATISTIQUE DU FILTRE D'ERREUR DE PREDICTION

Tout comme l'application du filtre d'erreur de prédiction auto-déconvolué, le calcul statistique du filtre d'erreur de prédiction $a$ peut s'effectuer de différentes manières. Dans tous les cas, la partie non prédictible des données se calcule à l'aide d'un opérateur linéaire M : $e = My$ M peut prendre différentes expressions :

- en fréquentiel $M(f)$ est défini par l'équation (8') ;
- en temporel,

. filtrage non récursif : $m(i) = \overline{a(-i)} * \overline{g(-i)} * g(i) * a(i)$
. filtrage récursif stationnaire :

$$m(i) = \left[ \frac{\overline{a(-i)}}{c(-i)} \right] * \left[ \frac{a(i)}{c(i)} \right]$$

. filtrage récursif non stationnaire : $M = A^* C^{*-1} C^{-1} A$.
. filtrage non récursif non stationnaire : $M = A^* G^* GA$

Filtrage récursif non stationnaire

$a$ peut être calculé, conformément à l'invention, par minimisation d'une norme d'erreur dépendant de $a$ et de $y$ ; ainsi, il est possible pour calculer $a$ de minimiser la norme de la partie non prédictible e des données sismiques : $\|e\|^2 = e^* e$.

e s'exprime à partir des données par :

$$e = M y$$

M étant un opérateur linéaire dont l'expression dépend de la méthode de déconvolution utilisée. Cet opérateur dépend du filtre d'erreur de prédiction. On a:

$$\|e\|^2 = y^* M^* M y$$

Il est toutefois préférable de chercher à minimiser en a(0), ..., a(p)

$$\beta_{min} = e^* e + \rho^* \rho = y^* My \qquad (15')$$

soit compte tenu de ce qui précède, de chercher à minimiser $\|C^{-1} Ay]\|^2$.

On va maintenant décrire plusieurs façons de calculer le filtre d'erreur de prédiction minimisant $\|C^{-1}Ay\|^2$. conformément à l'invention.

Pour calculer le filtre d'erreur de prédiction minimisant $\|C^{-1}Ay\|^2$ une première façon consiste à poser

$$d = C^{-1} Ay, \qquad (16)$$

qui s'écrit encore

$$d = C^{-1} Y\underline{a}$$

où $\underline{a}$ est un vecteur dont les composantes sont a(0), ..., a(p) et Y la matrice de Toeplitz formée à partir de y, à p+1 colonnes $y_o$, ... $y_p$ avec

$$y_i \; = \; \begin{vmatrix} y(p\text{-}i) \\ \dots \\ y(N\text{-}i) \end{vmatrix}. \qquad i = 0, \dots, p$$

Minimiser $\|C^{-1}Ay\|^2$ revient à minimiser d* d.

Calculons pour ce faire la matrice $U = C^{-1}Y$, puis $U^* U$, pour résoudre finalement, en négligeant la dépendance de U en $\underline{a}$

$$(U^* U)h = (1, 0, ..., 0)^*.$$

Après avoir calculé h, de composantes h(0), ..., h(p) on calcule ensuite a(i) en normalisant h(i) de telle façon que a(0)=1 par

$$a(i) = h(i) / h(0) \qquad i = 0, ..., p.$$

De façon à prendre en compte la dépendance de U en <u>a</u>, on reprend ensuite les calculs précédents avec les nouvelles valeurs de a(i) jusqu'à la convergence souhaitée.

Le processus décrit plus haut pour calculer *a* de façon statistique peut se résumer de la façon suivante (<u>processus N° 7</u>):

i) Choix de p+1 coefficients a(i) initiaux

2) Calcul du filtre non stationnaire C à partir de l'autocorrélation procolorisée r(i), C étant tel que $CC^* \approx R$, R étant la matrice de Toeplitz formée à partir de r(i)

3) Calcul par filtrage récursif non-stationnaire des p+1 vecteurs $u_i$ : $u_i = C^{-1}y_i$

4) Calcul de la matrice de covariance des $u_i$ : $COV_u(i, j) = u_i^* u_j$

5 ) Résolution de

$$\sum_{j=0}^{p} COV_u(i, j) \, h(j) = \delta(i) \quad i = 0, \ldots, p \text{ avec } \delta(1) = 0 \text{ et } \delta(i) = 0 \text{ pour } i = 1, \ldots, p$$

6) Calcul de a(i) = h(i) / h(0)     i=0, ..., p

7) Reprendre à l'étape 2) jusqu'à la convergence souhaitée des valeurs a(i)

8) Fin.

- En variante, pour calculer le filtre d'erreur de prédiction, on peut effectuer le filtrage non-récursif non stationnaire en remplaçant les étapes 2) et 3) du processus N° 7 par :

  2) Calcul du filtre non stationnaire G à partir de l'autocorrélation précolorisée r(i), G étant tel que $G^*G \approx R^{-1}$, R étant la matrice de Toeplitz formée à partir de r(i)

  3) Calcul par filtrage non-récursif non-stationnaire des p+1 vecteurs $u_i$ tels que $u_i = Gy_i$

- En variante, pour calculer le filtre d'erreur de prédiction minimisant $\|C^{-1}Ay\|^2$, on peut effectuer le filtrage dit récursif stationnaire.

L'équation précédente $d = C^{-1}Ay$ s'écrit, en écriture symbolique dans le domaine temporel

$$d(n) = a(i) * u(n), \tag{17}$$

avec

$$u(n) = \left[\frac{y(n)}{c(i)}\right] \tag{18}$$

Après avoir calculé le filtre d'erreur de prédiction amorti c(i), on calcule u(n) par l'équation (18) puis on cherche les valeurs a(i) minimisant $\sum |d(n)|^2$.

Il existe de nombreuses manières connues de l'homme du métier pour trouver les a(i) minimisant $\sum |d(n|^2$.

Si on utilise une méthode dite de corrélation, on considère que u(n) est connu pour n = 0, ..., N et est nul en dehors de ces valeurs de n, donc d(n) est non nul pour n = 0, ..., N+p et nul ailleurs. On minimise donc en fait

$$\sum_{n=0}^{N+p} |d(n)|^2$$

De préférence, on utilise une méthode dite de covariance qui a l'avantage de mieux prendre en compte les effets de bord. On considère que u(n) est connu pour n = 0, ..., N et est inconnu ailleurs. donc d(n) n'est connu que pour n = p, ..., N et on minimise

$$\sum_{n=p}^{N} |d(n)|^2 \ .$$

Le processus de calcul statistique du filtre d'erreur de prédiction par filtrage récursif stationnaire peut se résumer de la façon suivante (processus N° 8):

1) Choix d'un filtre d'erreur de prédiction initial *a,* de coefficients a(0), a(1), ..., a(p)
2) Calcul de l'autocorrélation précolorisée $r(i) = a(i) * \overline{a(-i)} + \varepsilon^2 b(i) * \overline{b(-i)}$
3) Calcul du filtre d'erreur de prédiction amorti c(i) à partir de r(i) par le processus N° 2.
4) Calcul par filtrage récursif de u(0), ..., u(N) par

$$u(n) = \left[ \frac{y(n)}{c(i)} \right]$$

5) Calcul de la matrice de covariance $COV_u$ de u(n)

$$COV_u (i, j) = \sum_{n = max(i, j)}^{n = N - min(i, j)} \overline{u(n-i)}u(n-j)$$

$$pour \quad i = 0, ..., p$$
$$et \quad j = 0, ..., p$$

6) Calcul du vecteur h de composantes h(0), ..., h(p) vérifiant
$COV_u h = [1, 0, ..., 0]^*$ (par la méthode de Cholesky par exemple)
7) Calcul de a(i) par normalisation de h(i) :

$$a(i) = h(i) / h(0)$$

8) Reprise à l'étape 2) jusqu'à la convergence souhaitée des valeurs a(i).

- En variante, pour calculer le filtre d'erreur de prédiction minimisant $\|C^{-1}Ay\|^2$, on peut effectuer un filtrage non récursif, qui comporte les étapes suivantes (processus N° 9) :

1) Choix d'un filtre d'erreur de prédiction initial *a,* de coefficients a(0) = 1, a(1), ..., a(p)
2) Calcul de l'autocorrélation précolorisée $r(i) = a(i) * \overline{a(-i)} + \varepsilon^2 b(i) * \overline{b(-i)}$
3) Calcul de g(i) à partir de r(i) par le processus N° 1 (étape 2)
4) Calcul de u(n) = g(i) * y(n)
5) Calcul de la matrice de covariance $COV_u$ de u(n)

$$COV_u (i, j) = \sum_{n = max(i, j)}^{n = N - min(i, j)} u^*(n-i) \ u(n-j)$$

$$avec \quad i = 0, ..., p$$
$$et \quad j = 0, ..., p$$

6) Calcul de h(0), ..., h(p) vérifiant
$COV_u h = [1, 0, ..., 0]^*$ (par la méthode de Cholesky par exemple)
7) Calcul de a(i) par normalisation de h(i) :

$$a(i) = h(i) / h(0)$$

8) Reprise à l'étape 2) jusqu'à convergence souhaitée des valeurs a(i).

- Dans une troisième variante, pour calculer le filtre d'erreur de prédiction minimisant
  $\|C^{-1}Ay\|^2$. on met en oeuvre les étapes suivantes (processus N° 10) :

  1) Choix d'un filtre d'erreur de prédiction initial *a,* de coefficients a(0) = 1, a(1), ..., a(p)
  2) Calcul de A(f) par transformée de Fourier de a(i)
  3) Calcul de UU(f) = $|Y(f)|^2$ / [$|A(f)|^2 + \varepsilon^2$ $|B(f)|^2$]
  4) Calcul de uu(i) par transformée de Fourier inverse de UU(f)
  5) Calcul de a(i) en résolvant le système d'équations de Toeplitz formé avec uu(i) par l'algorithme de Levinson sans second membre par exemple
  6) Reprise à l'étape 2) jusqu'à la convergence souhaitée des valeurs a(i).

Calcul statistique du filtre de précolorisation

On peut. sans sortir du cadre de l'invention, utiliser des techniques de minimisation de fonctions, connues de l'homme du métier, pour minimiser une norme donnée en fonction des coefficients b(0), ..., b(q) du filtre de précolorisation *b,* en fixant ou non la valeur $\varepsilon$. On peut en particulier dans un calcul itératif estimer $\varepsilon$ et/ou *b* en fonction des statistiques du bruit estimé e et celles du vecteur d'innovation $\rho$ à l'itération précédente. L'expression du vecteur d'innovation $\rho$, $\rho = \varepsilon B^* R^{-1}Ay$,
montre qu'il peut être calculé en tant que sous produit du calcul de e.

EXEMPLES D'APPLICATION D'UN PROCEDE SELON L'INVENTION DANS LE PLAN f-x

L'invention permet, lorsque le filtrage récursif est utilisé, d'effectuer un filtrage déterministe dans le plan f-x, quelle que soit la forme du signal $y_o$ à isoler dans le plan f-k, sans que la sélectivité du filtre ne se traduise par un temps de calcul élevé, et, dans le cas où le filtrage récursif non stationnaire décrit plus haut est employé, l'invention permet d'éviter les inconvénients dûs aux effets de bord rencontrés dans les procédés de l'art antérieur.

- Un exemple préféré de mise en oeuvre du procédé selon l'invention est le suivant, lorsque le signal à isoler est défini par sa localisation dans le plan f-k (filtrage déterministe) :

  1) Détermination par l'utilisateur d'une zone du plan f-k contenant le signal $y_o$ à isoler,
  2) Pour toute valeur de la variable espace x, effectuer la transformée de Fourier des données y(t, x) de la variable temporelle t pour obtenir des données transformées Y(f, x) dans le plan f-x,
  3) Pour chaque fréquence f du plan f-x,

  3a) prendre

  $$y(n) = Y(f,n),$$

  3b) déterminer les intervalles pour la variable k, contenant le signal prédictible $y_o$ que l'on cherche à isoler, en effectuant une coupe à f constant de ladite zone,
  3c) calculer le filtre d'erreur de prédiction spatial élémentaire (variable x) correspondant à chacun de ces intervalles en k pour un $\varepsilon$ donné (en utilisant par exemple la méthode de polynômes de Chebychev décrite plus haut),
  3d) calculer le filtre d'erreur de prédiction global a(i) et l'autocorrélation précolorisée correspondante r(i),
  3e) calculer le filtre d'erreur de prédiction non-stationnaire ep(j,i) à partir de l'autocorrélation précolorisée r(i) (processus N° 5 de préférence),
  3f) calculer la partie non prédictible e(n) des données par les étapes 3), 4), 5), 6) du processus de filtrage récursif non stationnaire (processus N° 6),
  3g) soustraire la partie non prédictible e(n) aux données y(n) pour obtenir la partie prédictible $y_o(n)$,
  3h) Reprendre à l'étape 3a) pour la fréquence f suivante sauf si la dernière fréquence du plan f-x est atteinte,

4) Pour tout x, effectuer la transformée de Fourier inverse de la variable f de e(n) ou de $y_o$(n) pour revenir dans le plan t-x.

- L'application de l'invention aux données sismiques y(f, x) dans le plan f-x et dans le cas où le filtre d'erreur de prédiction *a* est calculé de manière statistique, permet de pallier aux inconvénients du filtrage prédictif rencontrés dans l'art antérieur, notamment tel que proposé par Canales.

Un exemple préféré de mise en oeuvre du procédé selon l'invention, dans le cas d'un <u>filtrage statistique,</u> est le suivant :

1) Pour tout x, transformée de Fourier des données sismiques y(t, x) pour la variable t pour se placer dans le plan f-x
2) Pour chaque fréquence f du plan f-x :

2a) prendre y(n) = Y(f, n)
2b) choix d'une longueur p pour le filtre d'erreur de prédiction, d'un facteur $\varepsilon$ et d'un filtre de précoloriement b(0), ..., b(q), ainsi que d'un nombre d'itérations pour la convergence de a(i)
2c) calcul par filtrage récursif ascendant de :

$$u(n) = \left[\frac{y(n)}{c(i)}\right]$$

c(i) étant le filtre d'erreur de prédiction amorti de l'itération précédente (celui de la dernière itération de la fréquence précédente si c'est la première itération pour la fréquence en cours d'itération)
2d) calcul de la matrice de covariance de u(n) (étape 5) du processus N° 8) ; en variante, calcul de la matrice de corrélation de u(n)
2e) résolution du système pour obtenir les coefficients a(i) du filtre d'erreur de prédiction (étapes 6) et 7) du processus N° 8 de préférence). 2f) calcul de l'autocorrélation précolorisée r(i) (étape 1) du processus N° 6) et du filtre d'erreur de prédiction amorti c(i) (par processus N° 2 de préférence)
2g) retour en 2c) jusqu'à la convergence souhaitée des valeurs de a(i)
2h) obtention de la partie non prédictible e(n) des données par le processus N° 6
2i) soustraction de la partie non prédictible e(n) aux données y(n) pour obtenir la partie prédictible $y_o$(n)
2j) retour en 2a) sauf si dernière fréquence

3) Pour tout x, transformée de Fourier inverse de $y_o$(n) de la variable t pour obtenir $y_o$(t, x).

Le filtre d'erreur de prédiction est avantageusement calculé d'une façon récursive stationnaire, l'application du filtre d'erreur de prédiction autodéconvolué s'effectuant de façon récursive non stationnaire.

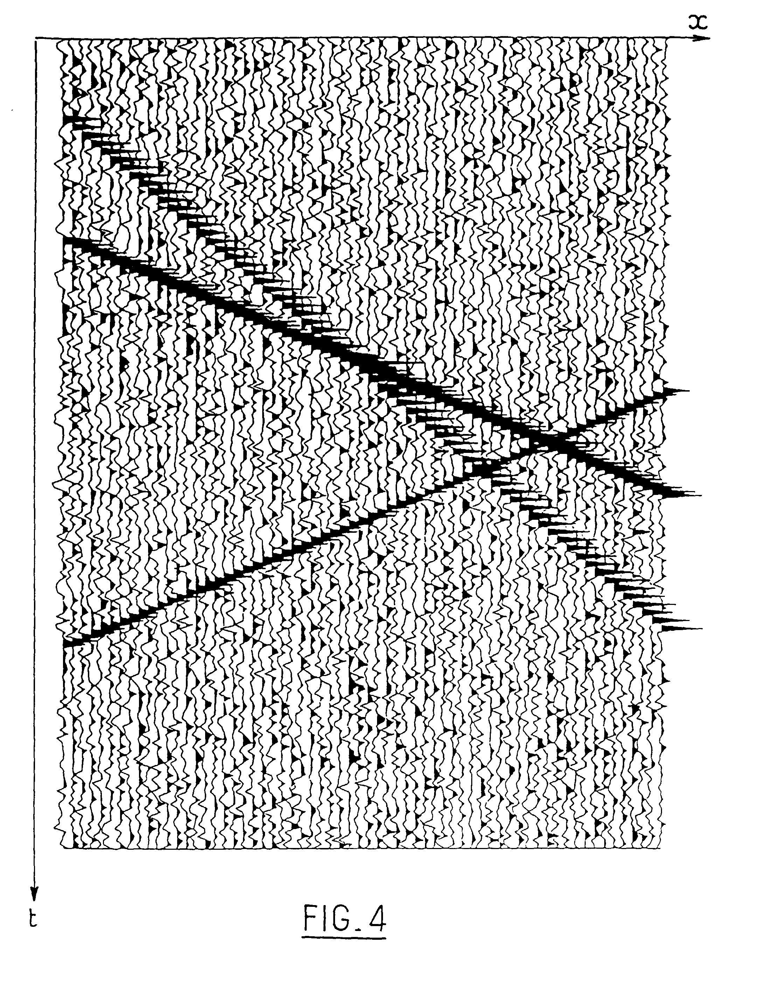

La figure 4 représente une section sismique t-x synthétique, l'axe de temps étant vertical et l'axe des x horizontal. Les données sismiques y(t, x) contiennent trois évènements prédictibles (matérialisés par des droites) que l'on cherche à isoler du bruit aléatoire non prédictible.

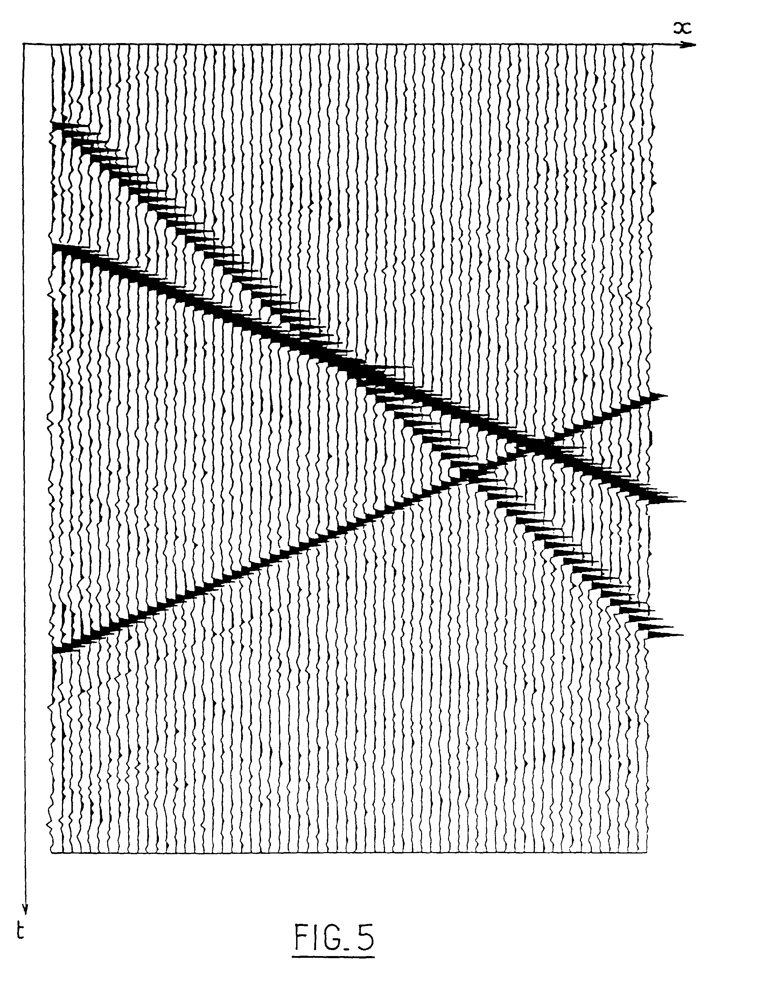

La figure 5 représente la partie prédictible $y_o$(t, x) après mise en oeuvre du procédé selon l'invention. On remarquera la forte atténuation du bruit aléatoire.

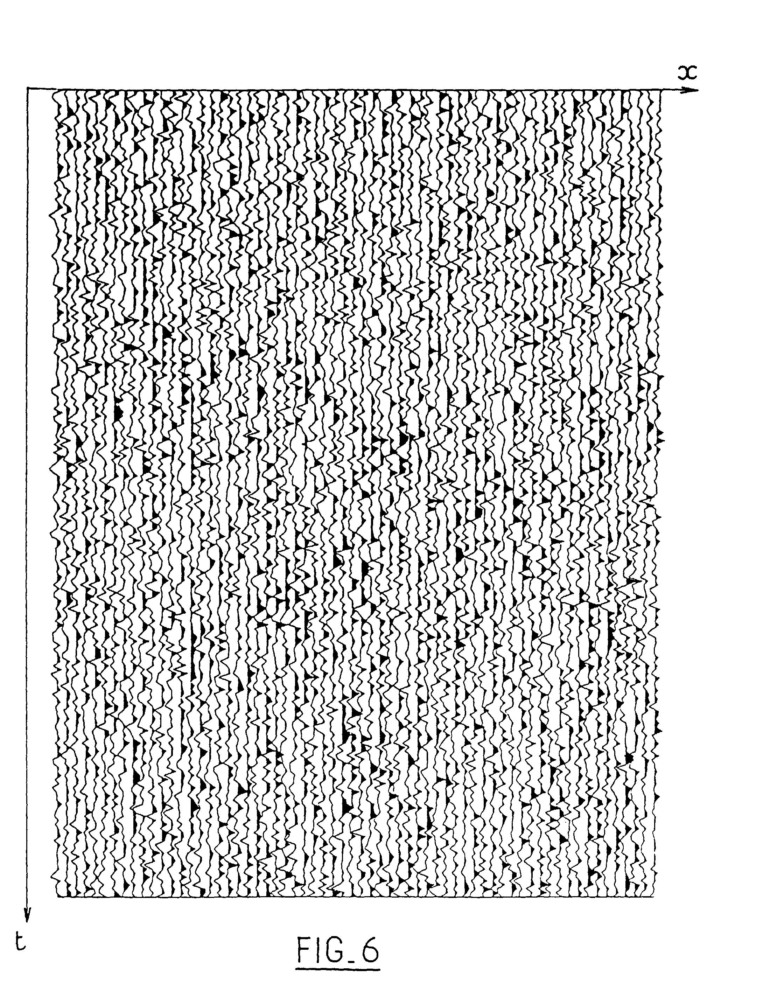

La figure 6 représente la partie non prédictible e(t, x) et l'on peut remarquer l'absence de signal prédictible même sur les bords (pas d'effets de bord).

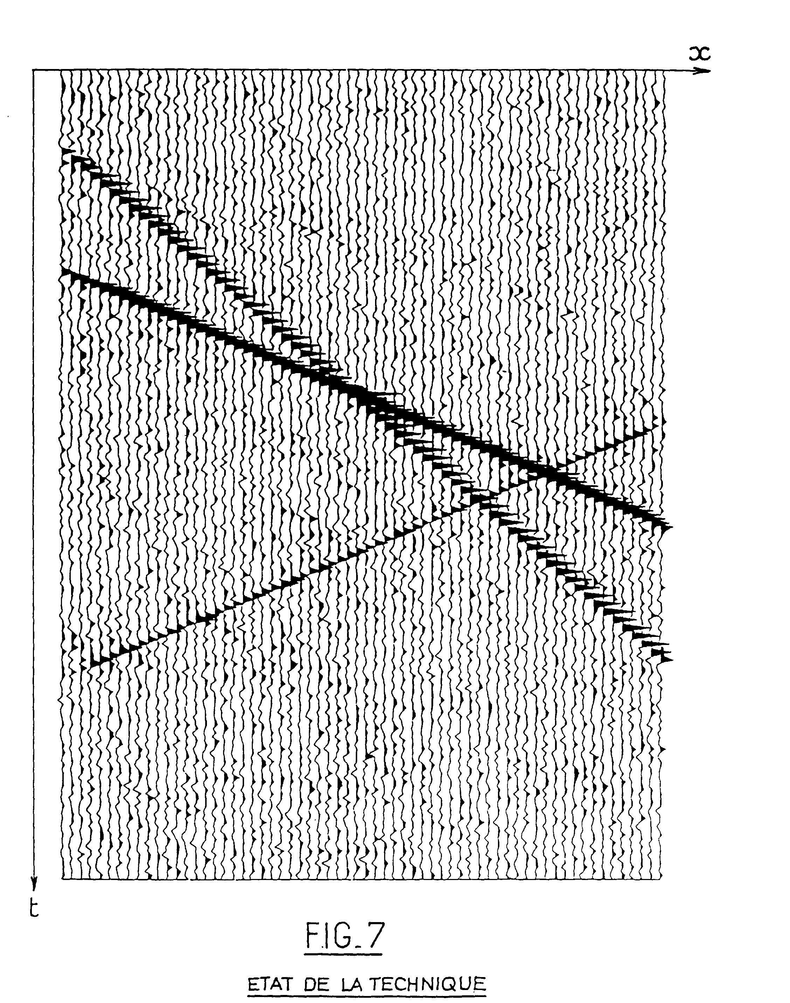

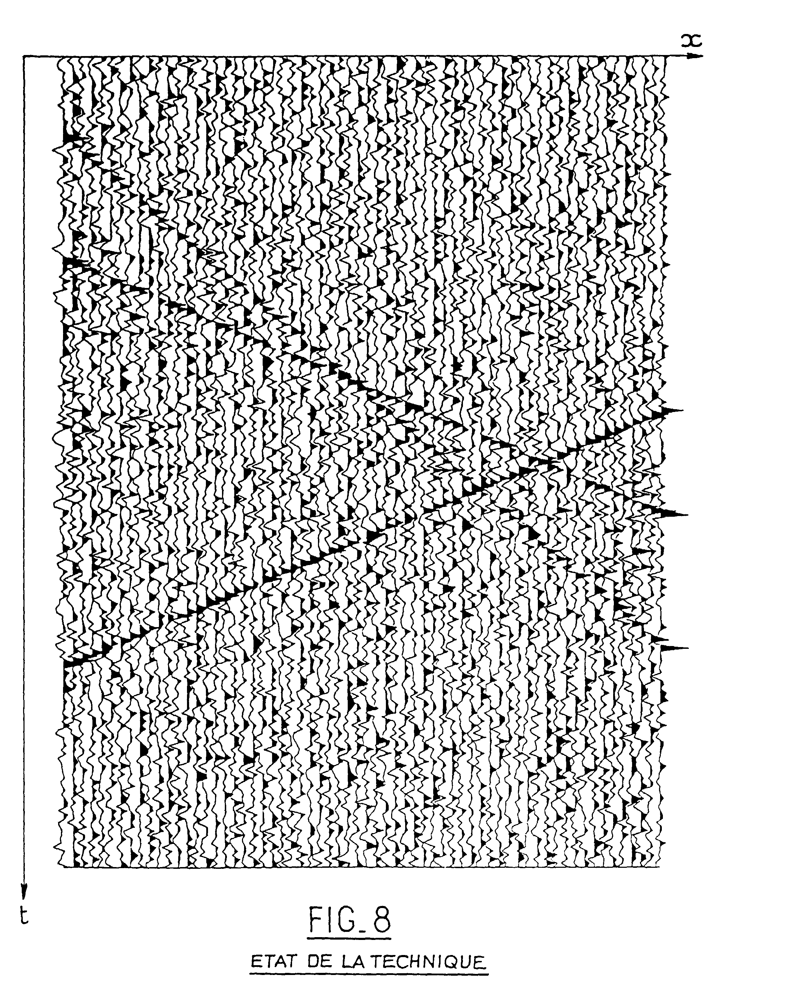

Les figures 7 et 8 illustrent respectivement les parties prédictibles et non prédictibles obtenues par la mise en oeuvre du procédé décrit par Canales, amélioré en prenant un filtre d'erreur de prédiction bilatéral a(-p). ..., a(0) = 1, ..., a(p) et en considérant que la partie non prédictible s'obtient en appliquant aux données ce filtre d'erreur de prédiction bilatéral.
On remarquera sur la figure 7 la moins bonne atténuation du bruit aléatoire et sur la figure 8 un résidu de signal prédictible.
Ainsi, appliquée à l'atténuation du bruit aléatoire, l'invention réalise une meilleure atténuation du bruit et une meilleure préservation du signal que celle permise par l'état de la technique.
L'invention n'est bien entendu pas limitée aux exemples qui viennent d'être décrits.
On peut, par exemple, imposer une forme particulière au filtre d'erreur de prédiction *a,* en choisissant les $p_{min}$ premiers coefficients du filtre d'erreur de prédiction nuls. Le filtre d'erreur de prédiction est alors de la forme [1, 0, ..., 0, a($p_{min}$ + 1), ..., a(p)]. Il faut bien entendu tenir compte de cette forme particulière du filtre d'erreur de prédiction lors de la résolution du système d'équations formé à partir de la matrice de covariance COV$_u$ dans les processus de calcul statistique du filtre d'erreur de prédiction. La forme particulière du filtre peut avantageusement servir à modéliser le bruit prédictible dû aux réflexions multiples, en vue de son élimination.

Les procédés conformes à l'invention, précédemment décrits, peuvent être mis oeuvre dans le domaine temporel ou spatial, et se généraliser aisément à plusieurs dimensions. On peut facilement traduire les équations à une dimension en équations à deux dimensions, etc..., à l'aide d'une notation appropriée.

Ainsi, par exemple, la prédictabilité de $y_o(n_{x1}, n_{x2})$ de support $n_{x1} = 0, ..., N_{x1}, n_{x2} = 0, ..., N_{x2}$ par le filtre d'erreur de prédiction $a(i, j)$ de support $i = 0, ..., p_{x1}, j = 0, ..., p_{x2}$ peut s'écrire :

$$a(i, j) ** y_o(n_{x1}, n_{x2}) = 0 \qquad\qquad (19)$$

où $**$ est l'écriture symbolique d'un produit de convolution à deux dimensions.

Soit $Y_{onx1}$ le vecteur de composantes que $Y_{onx1}(n_{x2}) = Y_o(n_{x1}, n_{x2})$ et $A_i$ la matrice de composantes $A_i(n, j) = a(i. n-j)$.

L'équation (19) s'écrit :

$$\sum_{i=0}^{p} A_i \ Y_{onx1-i} = 0$$

c'est-à-dire $A_i (*) Y_{onx1} = 0$

où $(*)$ est l'écriture symbolique pour le produit de convolution matriciel.

Avec cette notation l'équation à une dimension :

$$r(i) = a(i) * \overline{a(-i)} + \varepsilon^2 b(i) * \overline{b(-i)}$$

s'écrit :

$$R_n = A_n A^*_n + \varepsilon^2 B_n B^*_n$$

où pour tout n, $R_n$ est une matrice de Toeplitz par blocs.

Dans le cas du filtrage non récursif. la matrice du système à résoudre pour trouver les matrices $G_n$. a la structure d'une matrice de Toeplitz par blocs. le système étant donc résoluble par un algorithme de Levinson par blocs. Accessoirement, chacun des blocs est lui-même une matrice de Toeplitz.

Dans le cas du filtrage récursif, le calcul des matrices $C_n$ ou $EP_{ji}$ à partir de $R_n$ s'effectue par analogie avec les processus N° 2 et 5 de filtrage récursif précédemment décrits. Dans le cas déterministe, la méthode par moindres carrés se généralise aisément à plusieurs dimensions.

L'invention peut encore s'appliquer dans le domaine f-$k_{x1}$-$x_1$ en présence de données tridimensionnelles fonction des variables t, $x_1$ et $x_2$. On utilise avantageusement, dans le domaine f-$x_1$-$x_2$ un filtre d'erreur de prédiction à deux dimensions tel que décrit plus haut, et dans le domaine f-$k_{x2}$-$x_1$ on effectue pour chaque $k_{x2}$ un traitement analogue à celui des données sismiques dans le plan f-x, tel que décrit plus haut.

L'invention peut encore s'appliquer pour effectuer un traitement dit "multicanal", pour lequel on dispose de m jeux de données $y_j$

$$y_j = [y_j(0), ..., y_j(N)] \qquad j = 1, ..., m$$

comprenant une partie prédictible $y_{oj}$ pour un filtre d'erreur de prédiction commun.

On a $y_j(n) = y_{oj}(n) + e_j(n)$ et $a(i) * y_{oj}(n) \approx 0$.

On effectue conformément à l'invention un calcul statistique multicanal du filtre d'erreur de prédiction en minimisant

$$\sum_{j=1}^{m} y_j{}^* My_j,$$

par calcul des matrices de covariance $COV_j$ correspondant à chaque jeu de données $y_j$, en calculant $\Sigma_j COV_j = COV$ et en résolvant le système avec COV. Dans le processus N° 8 cela correspond aux étapes 4) et 5) qu'il faut faire pour tout j, l'étape 6) se faisant avec la matrice COV.

L'invention s'applique avantageusement à la restauration de données manquantes.

Il arrive souvent, dans la pratique, qu'il manque dans la section sismique t-x la trace correspondant à un capteur placé à une abscisse x sur la grille d'acquisition, ou bien que la trace correspondant à ce capteur soit inutilisable à cause d'un défaut de l'installation d'acquisition des données ou encore parce que le signal délivré par ce capteur a été saturé pendant l'enregistrement par un bruit très fort.

L'invention permet de restaurer la composante prédictible des données manquantes.

Les données sismiques sont alors supposées contenir un signal prédictible pour un filtre d'erreur de prédiction de coefficients a(i), un bruit impulsif pour les valeurs manquantes et un signal additif non prédictible.

On écrit les données sous la forme :

$$y = z - \sum_{j=1}^{m} w(j)p_j$$

où z désigne le vecteur contenant les données sismiques existantes et connues, $p_j$ le vecteur contenant la réponse impulsionnelle du $j^{ème}$ bruit impulsif correspondant à la $j^{ème}$ valeur manquante d'indice l(j).

Le vecteur $p_j$ a des composantes $p_j(0), ..., p_j(N)$ telles que :

$$p_j(n)=1 \text{ si } n=l(j) \text{ et } p_j(n)=0 \text{ si } n \neq l(j)$$

w(j) est un scalaire désignant l'amplitude inconnue du $j^{ème}$ bruit impulsif.

Les données manquantes dans le vecteur z peuvent être prises quelconques, par exemple égales à 0.

Dans ce cas,

$$z(l(j)) = 0 \text{ et } w(j) = -y(l(j)).$$

La valeur reconstituée pour l'emplacement l(j) est donc -w(j).

Soit P la matrice dont les colonnes sont les vecteur $p_j$.

Soit w le vecteur dont les composantes sont les scalaires w(j).

On a :

$$y = z - Pw$$

On doit effectuer sur ces données reconstituées y la séparation entre la partie prédictible $y_o$ et non prédictible e.

$$y = y_o + e$$

On a :

$$z = y_o + e + Pw$$

e se calcule à partir de y à l'aide d'un opérateur linéaire M, dont l'expression varie en fonction du mode de déconvolution utilisé, mais qui se met dans tous les cas sous la forme :

$$M = H^* \, H \text{ et } e = My$$

Dans le cas récursif non stationnaire, on a par exemple : $H = C^{-1}A$.

On détermine le vecteur w en minimisant

$$\beta_{min} + \lambda^2 \, w^* \, w = y^* \, My + \lambda^2 \, w^* \, w$$

d'après l'équation (15'), $\lambda$ étant un facteur de préblanchiment.

On cherche à minimiser la quantité

$$(z - Pw)^* \, M \, (z - Pw) + \lambda^2 \, w^* \, w \tag{20}$$

On trouve w minimisant (20) en résolvant :

$$(P^* \, M \, P + \lambda^2 \, I) \, w = p^* \, M \, z, \text{ I étant la matrice identité.}$$

En posant $D = HP$ et $s = Hz$ on a

$$(D^* \, D + \lambda^2 I) w = D^* s$$

On en déduit l'expression des données reconstituées y :

$$y = z - P(D^* \, D + \lambda^2 \, I)^{-1} \, D^* \, s$$

L'expression de la partie non prédictible est :

$$e = H^* \, H \, [z - P(D^* \, D + \lambda^2 \, I)^{-1} \, D^* \, s]$$

soit encore

$$e = H^* \, [s - D \, (D^* \, D + \lambda^2 \, I)^{-1} \, D^* \, s]$$

et la partie prédictible $y_o$ se calcule par :

$$y_o = y - e$$

$$y_o = z - P(D^* \, D + \lambda^2 \, I)^{-1} \, D^* \, s - H^* \, [s - D \, (D^* \, D + \lambda^2 \, I)^{-1} \, D^* \, s]$$

Si l'entrée est z et la sortie les données reconstituées y, on obtient grâce à l'invention une restauration des données manquantes.

Si l'entrée est z et la sortie la partie prédictible $y_o$, on obtient grâce à l'invention une restauration des données manquantes et une atténuation du bruit.

On peut bien entendu, sans sortir du cadre de la présente invention, généraliser au cas où les $p_j$ sont constitués par n'importe quelle réponse impulsionnelle d'un bruit de forme $p_j$ connue et d'amplitude w(j) inconnue.

Si le filtre d'erreur de prédiction *a* est inconnu. on a deux vecteurs w et $\underline{a}$ à trouver.

On part de valeurs initiales pour y(n) (par exemple avec les valeurs manquantes à 0). On calcule a(i) avec y (n) constant par une méthode de calcul statistique ou déterministe de filtre d'erreur de prédiction. Puis le procédé précédent de calcul de y à partir de z peut être utilisé pour actualiser y(n) avec a(i) constant. Puis on revient au calcul de a(i) dans le cas d'un calcul statistique.

Les données d'entrées étant les valeurs connues de y(n) et chaque vecteur pj pour j = 1, ..., m, la réponse impulsionnelle du $j^{ième}$ bruit, le procédé mis en oeuvre comporte les étapes suivantes dans le cas statistique (<u>processus N° 11)</u> :

1) Initialisation des données y(n).
2) Calcul du filtre d'erreur de prédiction a(i) pour le y(n) courant.
3) Actualisation de y(n) pour le a(i) courant :

    3a) calcul de m vecteurs $d_j = H\ p_j$      j=1, ..., m
    3b) calcul du vecteur s = H y
    3c) calcul de la matrice $\chi(i, j) = d_i^*\ d_j$      i, j = 1, ..., m
    3d) addition du facteur de préblanchiment :

$$\chi(i,\ i) \leftarrow \chi(i,\ i) + \lambda^2 \qquad i = 1, ..., m$$

    3e) calcul du vecteur $k(i) = d_i^*\ s$
    3f) résolution du système linéaire d'ordre m :

$$\sum_{j=1}^{m} r(i,\ j)\ w(j) = k(i)$$

    3g) actualisation de y(n) par :

$$y \leftarrow y - \sum_{j=1}^{m} w(j)\ p_j.$$

4) Retour en 2) ou 5) jusqu'à la convergence souhaitée pour a(i)
5) Calcul de u :

$$u = s - \sum_{j=1}^{m} w(j)\ d_j.$$

6) Calcul de e = H* u
7) Calcul de $y_o = y - e$.

Le procédé ci-dessus selon l'invention est avantageusement appliqué aux cas suivants :

<u>Bruit cohérent</u>

En prenant pour colonnes de P les composantes d'un bruit cohérent d'amplitude inconnue, on peut modéliser la présence d'un bruit cohérent dans les données sismiques. Par exemple, dans le plan f-x, un bruit de relation de dispersion connue $k_i(f)$ :

$$p_i(n) = e^{jn\Delta x k_i(f)} \qquad \text{avec } n = 0, ..., N$$

<u>Traces manquantes</u>

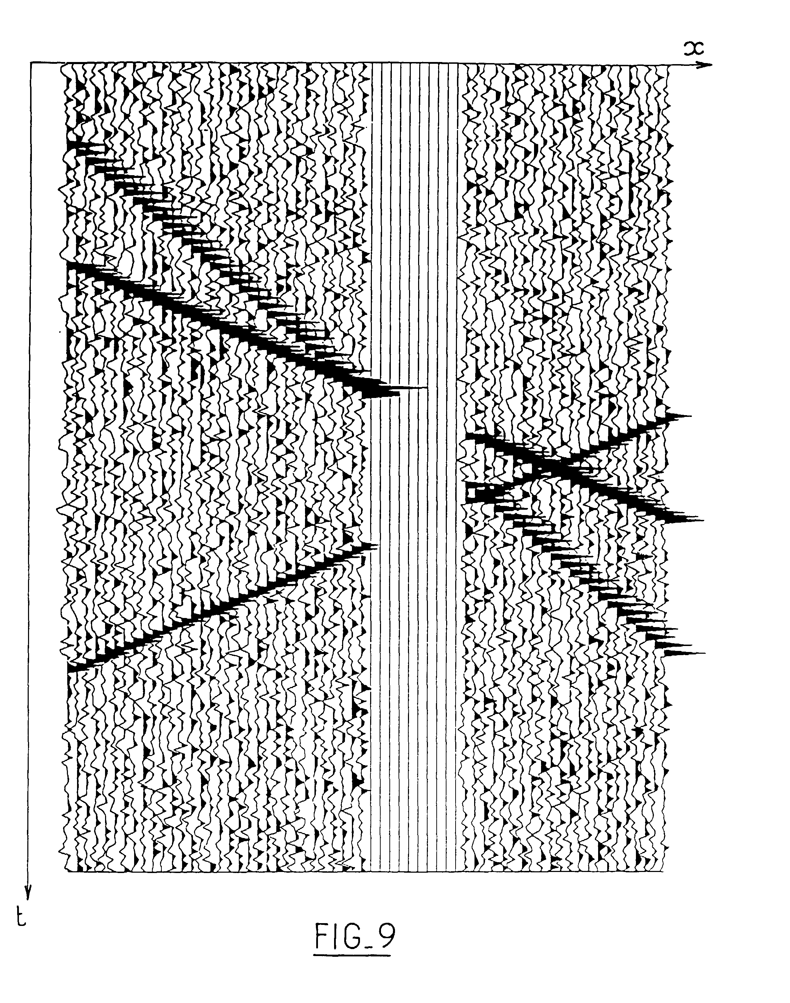

On a représenté sur la figure 9 une section sismique t-x dans laquelle dix traces sont manquantes.

De façon générale, supposons qu'il y ait m traces manquantes d'indices l(1)...l(m) sur la section sismique.

On construit la matrice P à m colonnes dont la $j^{ième}$ colonne est le vecteur $p_j$ de composantes $p_j(0)$, ..., $p_j(N)$ telles que :

$$p_j(n)=1 \text{ si } n=l(j) \text{ et } p_j(n)=0 \text{ si } n \neq l(j).$$

On modélise ainsi l'existence d'un bruit impulsif pour les valeurs données, ce qui revient à dire qu'elles sont inconnues.

On réduit avantageusement le temps de calcul en ne calculant qu'un seul vecteur d = $Hp_o$ avec $p_o(p) = 1$ et $p_o(n) = 0$ si $n \neq p$.

Dans ce cas $Ap_o = [a(0), ..., a(p), 0, ..., 0]^T$.

Si on utilise le filtrage récursif stationnaire pour appliquer H, alors :

$$d(i) = \left[\frac{a(i)}{c(i)}\right]$$

Ceci est une division puissances croissantes de deux polynômes qui peut être arrêtée dès que les valeurs de d(i) deviennent négligeables.

Le vecteur $d_j$ s'obtient en décalant le vecteur d de l(j)-p échantillons vers le bas et en mettant à 0 les premiers l(j)-p échantillons.

$$dj(n) = 0 \qquad \text{pour } n < l(j) - p$$

$$dj(n) = d(n-l(j)+p) \qquad \text{pour } n \geq l(j) - p$$

Dans le cas récursif non stationnaire les opérations de la forme s = Hy se font par les étapes 3) et 4) du processus N° 6, et les opérations de la forme e = H* u par les étapes 5) et 6) du même processus.

Une variante simplifiée consiste à remplacer l'étape 3) d'actualisation de y(n) à a(i) constant par un procédé itératif ne nécessitant pas de résolution de système linéaire. L'étape 3' remplaçant l'étape 3) est : 3') Actualisation de y(n) pour le a(i) courant :

3a) initialisation de $y_{it}(n) = y(n)$
3b) calcul de la partie non prédictible e(n) de $y_{it}(n)$
3c) actualisation de $y_{it}(n)$ pour les seuls échantillons n correspondant aux valeurs manquantes (n = l(j) j = 1, ..., m) par :

$$y_{it}(n) \leftarrow (1 - \lambda^2) y_{it}(n) + \lambda^2 y(n) - e(n)$$

3d) retour en 3b) ou 3e) si convergence souhaitée de $y_{it}(n)$
3e) actualisation de y(n) pour les seuls échantillons n correspondant aux valeurs manquantes par :

$$y(n) = y_{it}(n).$$

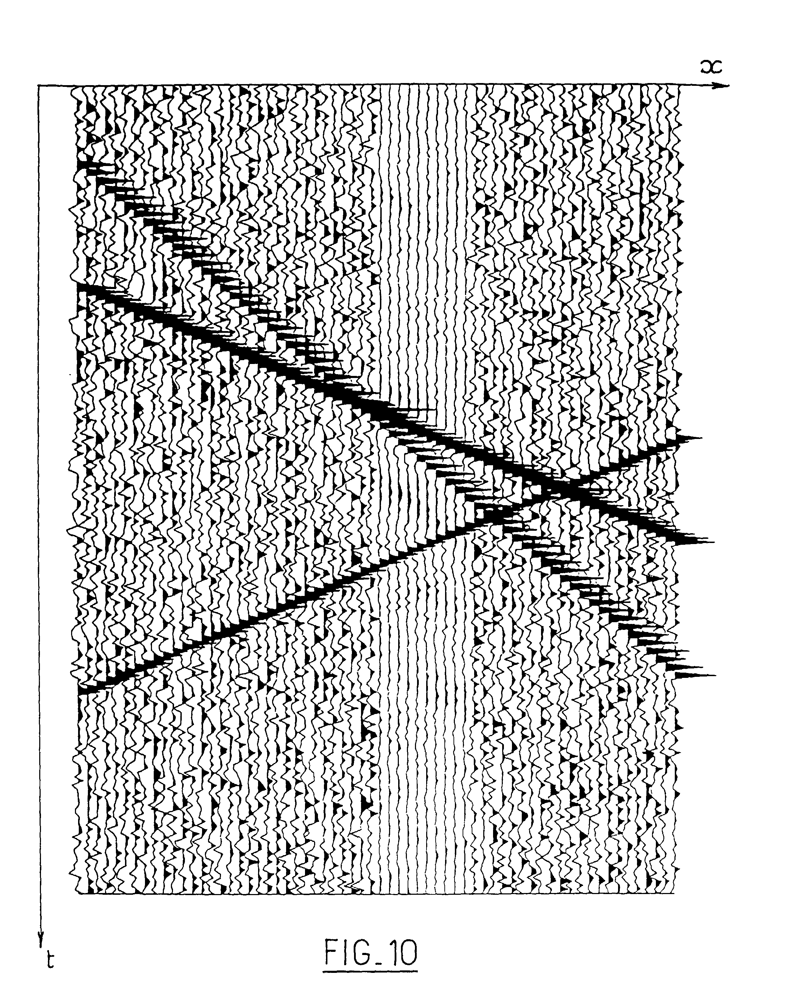

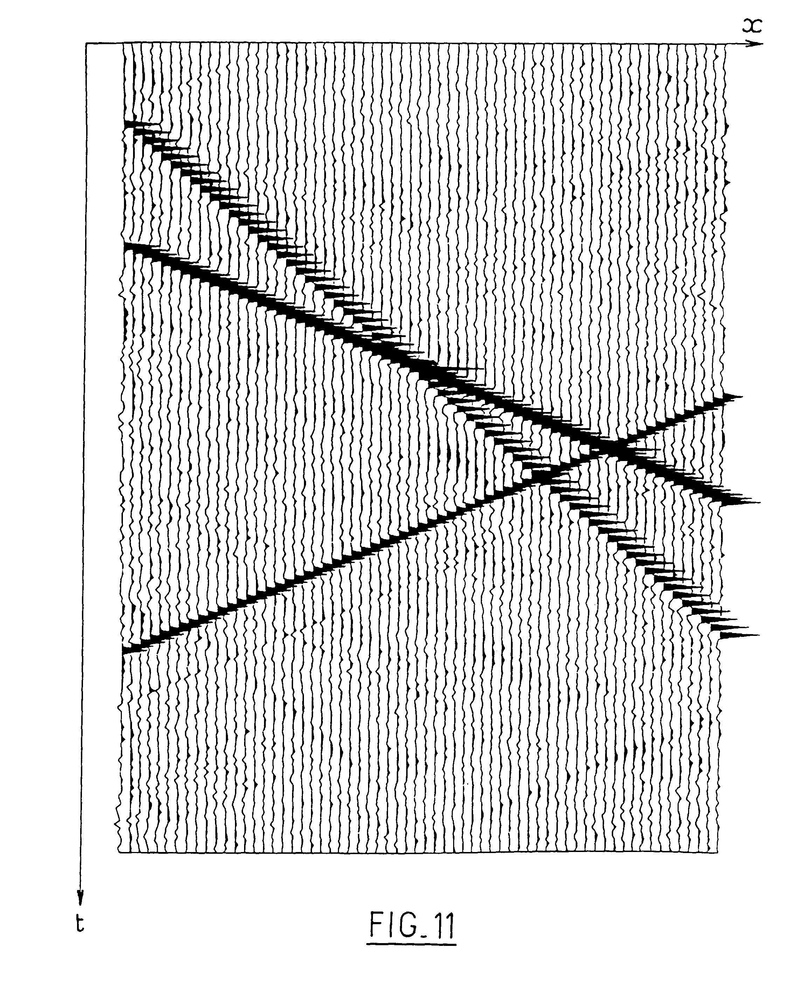

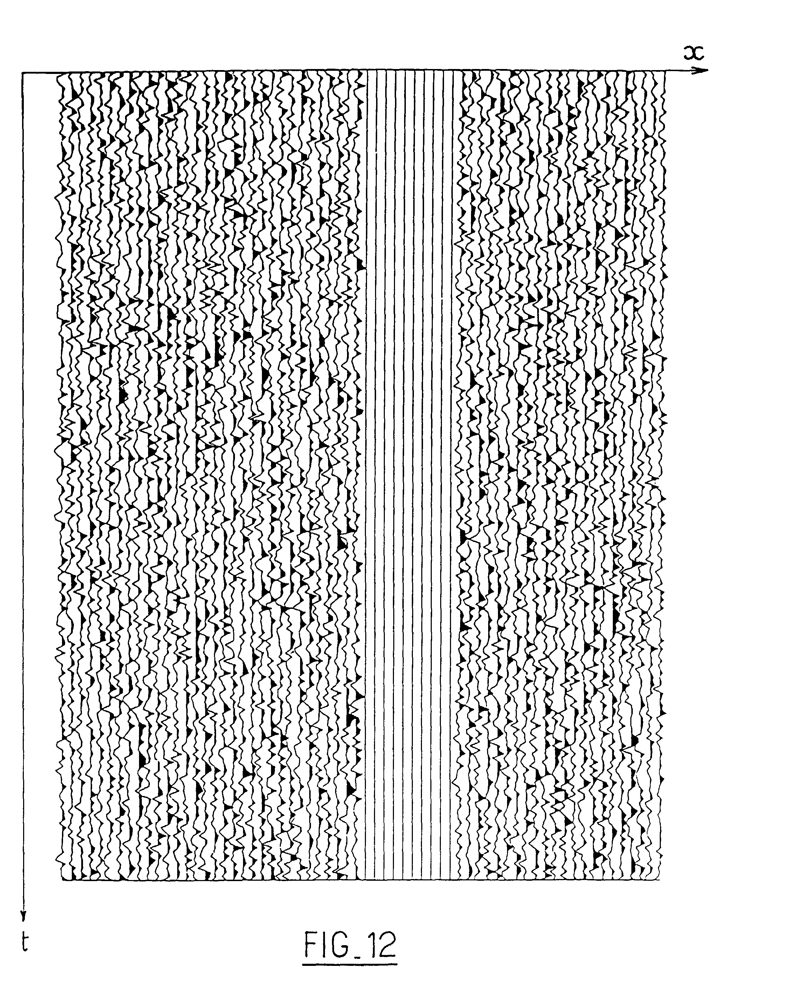

On a représenté sur la figure 10 les données y restaurées conformément à l'invention, et sur les figures 11 et 12 les parties respectivement prédictible et non prédictible des données restaurées. La comparaison des figures 11 et 5 montre que les dix traces manquantes ne dégradent que peu le résultat final.

Portions de traces manquantes

Il s'agit du cas où dans la section sismique t-x, on a des valeurs manquantes pour certains couples t, x connus (par exemple pour certaines traces, les valeurs y(t) correspondant à certains intervalles de temps sont manquantes).

Dans ce cas, on ne traite pas indépendamment chaque fréquence.

On a dans la section sismique t-x :

$$y = z - Pw$$

y est ici l'ensemble des valeurs en t et x d'une section sismique, z contient l'ensemble des valeurs connues, w l'ensemble des données inconnues, et P est un opérateur linéaire qui positionne ces données inconnues dans l'ensemble des valeurs en t et x de la section sismique.

On utilise avantageusement l'algorithme du gradient conjugué pour résoudre le système :

$$(D^* D + \lambda^2 I)\, w = D^* s \qquad\qquad (21)$$

Pour cela écrivons l'opérateur linéaire D sous la forme :

$$D = HFP \qquad\qquad (22)$$

F représente l'opérateur linéaire qui effectue la transformation du plan t-x dans le plan f-x par transformée de Fourier de la variable t en F pour chaque x.

Pour appliquer l'algorithme du gradient conjugué au système linéaire (21), il n'est pas nécessaire d'écrire la matrice D, il suffit de savoir réaliser les opérations :

$$u' = D\, v' \text{ et } r' = D^*\, u'$$

D'après l'expression (22), le procédé pour effectuer u' = D v' consiste à :

1) prendre les valeurs de v' (v' est un vecteur quelconque qui a la dimension des valeurs manquantes) et les placer sur la section t-x avec des valeurs nulles pour les valeurs connues (opérateur P')
2) effectuer la transformée de Fourier de t vers f pour tout x (appliquer l'opérateur F)
3) appliquer l'opérateur H pour tout f.

Le procédé pour effectuer r' = D* u' consiste à :

4) Appliquer l'opérateur H* pour tout f sur u' (u' étant une section dans le plan f-x)
5) effectuer la transformée de Fourier inverse de f vers t pour tout x (sans normaliser les valeurs en les divisant par le nombre d'échantillons (opérateur F*)
6) prendre sur la section sismique t-x obtenue les valeurs figurant aux emplacements manquants (opérateur P*).

On a d'autre part :

$$s = C\, F\, z$$

s peut donc se calculer en appliquant aux données connues les étapes 2) et 3) ci-dessus, y-D* s se calculant à l'aide des étapes 4), 5), 6).

A partir de g et du procédé effectuant en cascade les étapes 1) à 6), l'algorithme du gradient conjugué résout le système (21).

Une fois w calculé, on obtient la section sismique t-x reconstituée par :

$$y = z - Pw$$

On peut ensuite séparer y en une partie prédictible et une partie non prédictible dans le plan f-x pour réaliser l'atténuation du bruit.

On peut également, dans le cas où le filtre d'erreur de prédiction est inconnu, intégrer ce procédé dans le processus N° 11 en remplacement de l'étape 3) de calcul de y(n) dudit processus.

On peut aussi traduire l'étape 3' dans le cas de portions de traces manquantes. On obtient ainsi l'organigramme suivant (processus N° 12) :

1) Initialisation des données y(t, n)
2) Passage de y(t, n) à Y(f, n) par transformée de Fourier
3) Actualisation de a(f, i) :

   3a) pour tout f :

   i) $y(n) = Y(f, n)$
   ii) calcul statistique du filtre d'erreur de prédiction a(f, i) pour y(n) et i = 0, ..., p
   iii) initialisation de $Y_{it}(f, n) = Y(f, n)$       pour tout n
   iv) retour en 3a)i) ou 4) si dernière fréquence.

4) Actualisation de y(t, n) :

   4a) initialisation de $y_{it}(t, n) = y(t, n)$
   4b) passage de $y_{it}(t, n)$ à $Y_{it}(f, n)$ par transformée de Fourier
   4c) pour tout f :

   i) $y_{it}(n) = Y_{it}(f, n)$
   ii) calcul de la partie non prédictible e(n) de $y_{it}(n)$ au moyen de l'opérateur M(f) calculé à partir des a(f, i) déjà calculés en 3c)
   iii) $E(f, n) = e(n)$
   iv) retour en i) ou 4d) si dernière fréquence

   4d) passage de E(f, n) en e(t, n) par transformée de Fourier inverse
   4e) actualisation de $y_{it}(t, n)$ pour les seuls échantillons (t, n) correspondant aux valeurs manquantes par :

$$y_{it}(t, n) = (1-\lambda^2) \, y_{it}(t, n) + \lambda^2 \, y(t, n) - e(t, n)$$

   4f) retour en 4b) ou 4g) si convergence souhaitée de $y_{it}(t, n)$
   4g) actualisation de y(t, n) :

$$y(t, n) = y_{it}(t, n)$$

5) Retour en 2) ou 6) si convergence de a(f, i)
6) Obtention des données reconstituées y(t,n) que l'on peut séparer en $y_o(t,n)$ et e(t,n) dans le domaine (f-x).

Interpolation

On peut remplacer une section sismique donnée t-x par une section dont la grille spatiale présente un pas plus petit, et calculer les traces manquantes en mettant en oeuvre le procédé selon l'invention.

On suppose dans la suite que seule une trace sur m est connue.

On applique avantageusement la méthode suivante :

Soit A(f) le filtre d'erreur de prédiction pour les données interpolées calculé de façon déterministe ou par une autre méthode.

Soit Z(f) le spectre des données obtenues à partir des données connues supposées régulièrement espacées, en mettant à zéro les données manquantes situées sur une grille m fois plus fine que la grille des données connues, où m est le facteur d'interpolation. Soit Y(f) les données interpolées non débruitées que l'on cherche à estimer dans un premier temps.

Z(f) peut s'écrire

$$Z(f) = Y(f) + Y(f + 1/m) + Y(f + 2/m) + .... + Y(f + (m-1)/m).$$

Si $Y(f)$ contient $p$ raies de fréquences $f_j$, pour lesquelles $A(f)$ s'annule, le signal $Z(f)$ contiendra des fréquences $f_j + i/m$, $i = 0, ..., m-1$.

On construit le filtre d'erreur de prédiction

$$A_z(f) = A(f + 1/m)\, A(f + 2/m) \ldots A(f + (m-1)/m)$$

permettant d'enlever les fréquences $f_j + i/m$ pour $i = 1, ..., m-1$ et de récupérer $Y(f)$

Dans le domaine temporel, $a_z(i)$ se calcule par convolution des $m$ filtres d'erreur de prédiction obtenus à partir de $a(i)$ par modulation. $A(f + k/m)$, $k = 1, ..., m - 1$ est de longueur $p$ dans le domaine temporel et a pour expression :

$$[a(0), a(1)\, e^{2j\pi\, k/m}), a(2)e^{2j\pi\, 2k/m}, ..., a(p)e^{2j\pi\, pk/m}]$$

On calcule d'autre part l'autocorrélation de chaque filtre d'erreur de prédiction modulé, on ajoute un facteur de préblanchiment à chacun, et on convolue.

On obtient l'autocorrélation précolorisée $r_z(i)$.

On peut donc estimer les données interpolées non débruitées $Y(f)$ en appliquant à $Z(f)$ le filtre d'erreur $M(f)$ calculé à partir du filtre d'erreur de prédiction $A_z(f)$. Ceci s'écrit dans le cas fréquentiel :

$$Y(f) = \frac{\left|A_z(f)\right|^2}{R_z(f)} Z(f)$$

mais peut aussi se calculer dans le domaine temporel par une des structures de filtrage temporel décrites ci-dessus.

A partir des données interpolées non débruitées $Y(f)$, on peut calculer le signal interpolé débruité $Y_0(f)$ à l'aide du filtre d'erreur de prédiction $A(f)$, de son autocorrélation précolorisée et par une des méthodes décrites ci-dessous. Ceci s'écrit dans le cas fréquentiel :

$$Y_0(f) = Y(f) - \frac{|A(f)|^2}{R(f)}\, Y(f)$$

Une autre possibilité plus rapide est de faire $Y(f) = Z(f)$ et de débruiter après, ce qui revient à écrire :

$$Y_0(f) = Z(f) - \frac{|A(f)|^2}{R(f)}\, Z(f)$$

Cette méthode peut donner de bons résultats si le filtre

$$1 - \frac{|A(f)|^2}{R(f)}$$

présente une zone affaiblie large.

## Revendications

1. Procédé de prospection sismique dans lequel :

- on provoque un ébranlement sismique dans le sous-sol,
- on recueille à l'aide de capteurs des données sismiques échantillonnées $y = [y(0),...,y(N)]^T$, où N est un nombre entier, contenant un signal $y_o$ que l'on cherche à isoler noyé dans un bruit additif,
- on réalise dans le domaine temporel ou fréquentiel un filtrage des données sismiques, pour obtenir des données filtrées dans lesquelles le signal à isoler est absent,
- on soustrait aux données sismiques initiales les données filtrées pour obtenir des données traitées $y_o(0),..., y_o(N)$ correspondant au signal $y_0$ dépourvu de bruit additif,
- on traite les données ainsi acquises pour en déduire une information utile sur la géologie du sous-sol,

le filtre utilisé pour le filtrage des données sismiques étant un filtre fréquentiel d'erreur de prédiction autodéconvolué M(f) tel que :

$$M(f) = |A(f)|^2/R(f),$$

ou un filtre équivalent dans le domaine temporel,

A(f) étant le spectre d'un filtre $a$ d'erreur de prédiction à p+1 coefficient a(0), ..., a(p), où p est un nombre entier inférieur à N, $a$ étant préalablement choisi pour annuler au mieux par convolution le signal $y_0$ que l'on cherche à isoler,
R(f) étant une autocorrélation précolorisée de ce filtre de prédiction $a$ vérifiant :

$$R(f) = |A(f)|^2 + \varepsilon^2 |B(f)|^2,$$

où $\varepsilon$ et B(f) sont respectivement un facteur et un filtre de précolorisation préalablement choisis en fonction de la sélectivité souhaitée pour le filtrage.

2. Procédé selon la revendication 1. caractérisé en ce que le filtre d'erreur de prédiction autodéconvolué est non stationnaire pour des données sismiques proches des bords.

3. Procédé selon la revendication 1, caractérisé en ce que les p+1 coefficients a(0), a(1), ..., a(p) du filtre d'erreur de prédiction $a$ sont calculés de façon déterministe à partir de paramètres physiques connus du signal $y_o$ que l'on cherche à isoler.

4. Procédé selon la revendication 3, le signal $y_o$ présentant un spectre $Y_o(f)$ constitué de p raies de fréquences fq (q = 1, ..., p), caractérisé en ce que les coefficients a(0), a(1), ..., a(p) du filtre d'erreur de prédiction $a$ sont calculés par

$$a(i) = a_1(i) * a_2(i) * ... * a_p(i)$$

$$a(0) = 1$$

avec

$$a_q(0) = 1$$

$$a_q(1) = - e^{-2j\pi f_q}$$

5. Procédé selon la revendication 3, le signal $y_o$ présentant un spectre $Y_o(f)$ dont le support comporte au moins un intervalle de fréquence

$$[f_q - \Delta f_q; f_q + \Delta f_q]$$

$\Delta f_q$ étant la demi-largeur de l'intervalle centré sur la fréquence $f_q$. caractérisé en ce que les coefficients a(0), a (1), ..., a(p) du filtre d'erreur de prédiction $a$, de spectre A(f), sont déterminés par une méthode des moindres carrés, en minimisant l'intégrale $\int_0 W(f) |A(f)|^2 df$, avec a(0) = 1 et W(f) une fonction qui vaut 1 lorsque la fréquence f est dans un intervalle de fréquences où le spectre $Y_o(f)$ est non nul, et 0 ailleurs.

6. Procédé selon la revendication 3, le signal $y_o$ présentant un spectre $Y_o(f)$ dont le support comporte Q intervalles de fréquences

$$[f_q - \Delta f_q, f_q + \Delta f_q] \qquad q = 1,..., Q$$

$\Delta f_q$ étant la demi-largeur d'un intervalle centré sur la fréquence $f_q$, caractérisé en ce que les coefficients du filtre d'erreur de prédiction $a$ sont déterminés par

$$a(i) = a_1(i) * a_2(i) * ... * a_Q(i)$$

avec

$$a_q(i) = s_q(i) / s_q(0) \qquad \text{pour } q = 1, ..., Q$$

les coefficients $s_q(i)$, i = 0, ..., $p_q$ étant déterminés par la relation

$$S_q(f) = e^{-j\pi fp} T_{pq}[\sin(\pi(f-f_q)) / \sin(\pi \Delta f_q)] = \Sigma s_q(m) e^{-j2\pi mf}$$

où $T_{pq}$ est le polynôme de Chebychev de première espèce et d'ordre $p_q$ et en ce que l'autocorrélation précolorisée est calculée par :

$$r(i) = r_1(i) * r_2(i) * ... * r_Q(i)$$

avec

$$r_q(i) = a_q(i) * \overline{a_q(-i)} + \varepsilon_q^2 \delta(i)$$

et

$$\varepsilon_q >> \frac{1}{s_q(0)}$$

7. Procédé selon la revendication 1, caractérisé en ce que le filtrage consiste dans le domaine fréquentiel à multiplier les données sismiques y(0), ..., y(N) par le filtre M(f).

8. Prodécé selon la revendication 1, caractérisé en ce que, dans le cas d'un filtrage dans le domaine temporel, on calcule l'autocorrélation précolorisée r(i) correspondant dans le domaine temporel à R(f) et telle que :

$$r(i) = a(i) * \overline{a(-i)} + \varepsilon^2 b(i) * \overline{b(-i)}$$

où $b$ est le filtre de précolorisation équivalent à B(f) dans le domaine temporel.

9. Procédé selon la revendication 8, caractérisé en ce que le filtrage par le filtre d'erreur de prédiction auto-déconvolué comporte les étapes suivantes :

1) Calcul d'un filtre g(i) tel que $r(i) * \overline{g(-i)} * g(i) \approx \delta(i)$

2) Calcul par filtrage non-récursif pour n variant de 0 à N de e(n), tel que :

$$e(n) = \overline{a(-i)} * \overline{g(-i)} * g(i) * a(i) * y(n),$$

e(n) étant le bruit additif,

**10.** Procédé selon la revendication 8, caractérisé en ce que le filtrage par le filtre d'erreur de prédiction auto-déconvolué comporte les étapes suivantes :

1) Calcul du filtre c(i) tel que $c(i) * \overline{c(-i)} \approx r(i)$

2) Calcul par filtrage récursif ascendant pour n variant de 0 à N de u(n) tel que :

$$u(n) = \left[ \frac{a(i)}{c(i)} \right] * y(n)$$

3) Calcul par filtrage récursif descendant pour n variant de 0 à N de e(n) tel que :

$$e(n) = \left[ \frac{\overline{a(-i)}}{\overline{c(-i)}} \right] * u(n)$$

e(n) étant le bruit additif.

**11.** Procédé selon la revendication 8, caractérisé en ce que l'application aux données du filtre d'erreur de prédiction auto-déconvolué comporte les étapes suivantes :

1) Calcul d'un filtre non stationnaire G à partir de l'autocorrélation précolorisée r(i), G étant tel que $G^* G \approx R^{-1}$, R étant la matrice de Toeplitz formée à partir de r(i)

2) Calcul par filtrage non-récursif stationnaire de s = Ay correspondant à

$$s(n) = a(i) * y(n)$$

3) Calcul par filtrage non-récursif non stationnaire de u = Gs

4) Calcul par filtrage non-récursif non stationnaire de v = G*u

5) Calcul par filtrage non-récursif stationnaire de e = A* v correspondant à

$$e(n) = \overline{a(-i)} * v(n)$$

e(n) étant le bruit additif.

**12.** Procédé selon la revendication 8, caractérisé en ce que l'application aux données sismiques du filtre d'erreur de prédiction auto-déconvolué comporte les étapes suivantes :

1) Calcul du filtre non stationnaire C à partir de l'autocorrélation précolorisée r(i), C étant tel que $CC^* \approx R$, R étant la matrice de Toeplitz formée à partir de r(i)

2) Calcul par filtrage non-récursif stationnaire de s = Ay correspondant à

$$s(n) = a(i) * y(n)$$

3) Calcul par filtrage récursif non stationnaire de $u = C^{-1}s$

4) Calcul par filtrage récursif non stationnaire de $v = C^{-1} *u$

5) Calcul par filtrage non-récursif stationnaire de $e = A^* v$ correspondant à

$$e(n) = \overline{a(-i)} * v(n)$$

$e(n)$ étant le bruit additif.

13. Procédé selon la revendication 1, caractérisé en ce que les p+1 coefficients a(0), a(1), ..., a(p) du filtre d'erreur de prédiction *a* sont calculés de façon statistique par itérations successives, par minimisation d'une norme dépendant de *a* et des données sismiques y.

14. Procédé selon la revendication 13, caractérisé en ce que les p+1 coefficients a(0), a(1), ..., a(p) sont calculés par le processus suivant :

1) Calcul de Y(f) par transformée de Fourier des données y(n)

2) Choix d'un filtre d'erreur de prédiction initial *a*, de coefficients a(0) = 1, a(1), ..., a(p)

3) Calcul de A(f) par transformée de Fourier de a(i)

4) Calcul de $UU(f) = |Y(f)|^2 / [|A(f)|^2 + \varepsilon^2 |B(f)|^2]$

5) Calcul de uu(i) par transformée de Fourier inverse de UU(f)

6) Calcul de a(i) en résolvant le système d'équations de Toeplitz formé avec uu(i)

7) Reprise à l'étape 2) jusqu'à la convergence souhaitée des valeurs a(i).

15. Procédé selon les revendications 8 et 13, caractérisé en ce que les p+1 coefficients a(0), a(1), ..., a(p) sont calculés par le processus suivant :

1) Choix d'un filtre d'erreur de prédiction initial *a*, de coefficients a(0), a(1), ..., a(p)

2) Calcul de l'autocorrélation précolorisée $r(i) = a(i) * \overline{a(-i)} + \varepsilon^2 b(i) * \overline{b(-i)}$

3) Calcul de g(i) à partir de r(i), g(i) étant tel que $r(i) * g(i) * \overline{g(-i)} \approx \delta(i)$. avec $\delta(i) = 1$ si $i = 0$ et $\delta(i) = 0$ sinon

4) Calcul de $u(n) = g(i) * y(n)$

5) Calcul de la matrice de covariance $COV_u$ de u(n)

$$COV_u (i, j) = \sum_{n = max(i, j)}^{n = N - min(i, j)} \overline{u(n-i)} \; u(n-j)$$

$$avec \quad i = 0, ..., p$$
$$et \quad j = 0, ..., p$$

6) Calcul de h(0), ..., h(p) vérifiant

$$COV_u h = [1, 0, ... 0]^*$$

7) Calcul de a(i) par normalisation de h(i) :

$$a(i) = h(i) / h(0)$$

8) Reprise à l'étape 2) jusqu'à convergence souhaitée des valeurs a(i).

16. Procédé selon les revendications 8 et 13, caractérisé en ce que les p+1 coefficients a(0), a(1), ..., a(p) sont calculés par le processus suivant :

1) Choix d'un filtre d'erreur de prédiction initial *a*, de coefficients a(0), a(1), ..., a(p)

2) Calcul de l'autocorrélation précolorisée $r(i) = a(i) * \overline{a(-i)} + \varepsilon^2 b(i) * \overline{b(-i)}$ où b(i) est un filtre de précolorisation

EP 0 730 744 B1

3) Calcul du filtre d'erreur de prédiction amorti c(i) à partir de r(i) par un processus itératif de filtrage temporel récursif

4) Calcul par filtrage récursif de u(0), ..., u(N) par

$$u(n) = [\frac{y(n)}{c(i)}]$$

5) Calcul de la matrice de covariance $COV_u$ de u(n)

$$COV_u(i, j) = \sum_{n = max(i, j)}^{n = N - min(i, j)} \overline{u(n-i)} \, u(n-j)$$

$$pour \quad i = 0, ..., p$$
$$et \quad j = 0, ..., p$$

6) Calcul du vecteur h de composantes h(0) h(p) vérifiant

$$COV_u h = [1, 0, ..., 0]^*$$

7) Calcul de a(i) par normalisation de h(i) :

$$a(i) = h(i) / h(0)$$

8) Reprise à l'étape 2) jusqu'à la convergence souhaitée des valeurs a(i).

**17.** Procédé selon les revendications 8 et 13, caractérisé en ce que les p+1 coefficients a(0), a(1), ..., a(p) sont calculés par le processus suivant :

1) Choix de p+1 coefficients a(i) initiaux
2) Calcul du filtre non stationnaire G à partir de l'autocorrélation précolorisée r(i), G étant tel que $G^*G \approx R^{-1}$. R étant la matrice de Toeplitz formée à partir de r(i)
3) Calcul par filtrage non-récursif non-stationnaire des p+1 vecteurs

$$u_i : u_i = Gy_i$$

4) Calcul de la matrice de covariance des $u_i$ : $COV_u(i, j) = u_i {}^* u_j$
5) Résolution de

$$\sum_{j=0}^{p} COV_u(i, j) \, h(j) = \delta(i), \, i = 0, ..., p, \, avec \, \delta(1) = 0 \, et \, \delta(i) = 0 \, pour \, i = 1, ..., p$$

6) Calcul de a(i) = h(i) / h(0) i = 0, ..., p
7) Reprendre à l'étape 2) jusqu'à la convergence souhaitée des valeurs a(i)
8) Fin.

**18.** Procédé selon les revendications 8 et 13, caractérisé en ce que les p+1 coefficients a(0), a(1), ..., a(p) sont calculés par le processus suivant :

35

EP 0 730 744 B1

1) Choix de p+1 coefficients a(i) initiaux
2) Calcul du filtre non stationnaire C à partir de l'autocorrélation précolorisée r(i), C étant tel que CC* ≈ R, R étant la matrice de Toeplitz formée à partir de r(i)
3) Calcul par filtrage récursif non-stationnaire des p+1 vecteurs $u_i$ tels que:

$$u_i = C^{-1} y_i$$

avec

$$y_i = [y(p-i), ..., y(N-i)]^T \text{ pour } i = 0 \text{ à } p$$

4) Calcul de la matrice de covariance des $u_i$ : $COV_u(i, j) = u_i * u_j$
5) Résolution de

$$\sum_{j=0}^{p} COV_u(i, j) \, h(j) = \delta(i) \; i = 0, ..., p \text{ avec } \delta(1) = 0 \text{ et } \delta(i) = 0 \text{ pour } i = 1, ..., p$$

6) Calcul de a(i) = h(i) / h(0)     i = 0, ..., p
7) Reprendre à l'étape 2) jusqu'à la convergence souhaitée des valeurs a(i)
8) Fin.

**19.** Procédé selon les revendications 2, 3, 6, 8, 12 prises en combinaison, caractérisé en ce qu'il comprend les étapes suivantes :

1) Détermination par l'utilisateur d'une zone du plan f-k contenant le signal $y_o$ à isoler,
2) Pour toute valeur de la variable espace x. effectuer la transformée de Fourier des données y(t, x) de la variable temporelle t pour obtenir des données transformées Y(f, x) dans le plan f-x,
3) Pour chaque fréquence f du plan f-x,

3a) prendre

$$y(n) = Y(f,n),$$

3b) déterminer les intervalles pour la variable k, contenant le signal prédictible $y_o$ que l'on cherche à isoler. en effectuant une coupe à f constant de ladite zone,
3c) calculer le filtre d'erreur de prédiction spatial élémentaire (variable x) correspondant à chacun de ces intervalles en k pour un ε donné,
3d) calculer le filtre d'erreur de prédiction global a(i) et l'autocorrélation précolorisée correspondante r(i).
3e) calculer le filtre d'erreur de prédiction non-stationnaire ep(j,i) à partir de l'autocorrélation précolorisée r(i).
3f) calculer la partie non prédictible e(n) des données par filtrage récursif non stationnaire à l'aide des coefficients ep(j,i),
3g) soustraire la partie non prédictible e(n) aux données y(n) pour obtenir la partie prédictible $y_o(n)$,
3h) reprendre à l'étape 3a) pour la fréquence f suivante sauf si la dernière fréquence du plan f-x est atteinte.

4) Pour tout x, effectuer la transformée de Fourier inverse de la variable f de e(n) ou de $y_o(n)$ pour revenir dans le plan t-x.

**20.** Procédé selon les revendications 2, 8, 12, 13, et 16 caractérisé en ce qu'il comprend les étapes suivantes :

1) Pour tout x, transformée de Fourier des données sismiques y(t, x) pour la variable t pour se placer dans le plan f-x

2) Pour chaque fréquence f du plan f-x :

2a) prendre $y(n) = Y(f, n)$

2b) choix d'une longueur p pour le filtre d'erreur de prédiction, d'un facteur $\varepsilon$ et d'un filtre de précoloriement $b(0), ..., b(q)$, ainsi que d'un nombre d'itérations pour la convergence de $a(i)$

2c) calcul par filtrage récursif ascendant de :

$$u(n) = \left[\frac{y(n)}{c(i)}\right]$$

$c(i)$ étant le filtre d'erreur de prédiction amorti de l'itération précédente (celui de la dernière itération de la fréquence précédente si c'est la première itération pour la fréquence en cours d'itération)

2d) calcul de la matrice de covariance ou de corrélation de $u(n)$

2e) résolution du système pour obtenir les coefficients $a(i)$ du filtre d'erreur de prédiction,

2f) calcul de l'autocorrélation précolorisée $r(i)$ et du filtre d'erreur de prédiction amorti $c(i)$

2g) retour en 2c) jusqu'à la convergence souhaitée des valeurs de $a(i)$

2h) obtention de la partie non prédictible $e(n)$ des données par filtrage récursif non stationnaire

2i) soustraction de la partie non prédictible $e(n)$ aux données $y(n)$ pour obtenir la partie prédictible $y_o(n)$

2j) retour en 2a) sauf si dernière fréquence

3) Pour tout x, transformée de Fourier inverse de $y_o(n)$ de la variable t pour obtenir $y_o(t, x)$.

**21.** Procédé selon la revendication 1, appliqué à la restauration de données présentant des valeurs manquantes d'indice $l(j)$, j étant compris entre 1 et m, caractérisé en ce qu'il comprend les étapes suivantes :

1) Initialisation des données à restaurer $y(n)$

2) Calcul du filtre d'erreur de prédiction $a(i)$ pour le $y(n)$ courant

3) Actualisation de $y(n)$ pour le $a(i)$ courant :

3a) calcul de m vecteurs $dj = H\, p_j$ $j = 1, ..., m$ $p_j$ étant un vecteur contenant la réponse impulsionnelle du $j^{ième}$ bruit impulsif correspondant à la $j^{ième}$ valeur manquante d'indice $l(j)$, H étant l'opérateur linéaire tel que $M = H^* H$, M étant l'opérateur permettant de calculer le bruit e à partir des données y

3b) calcul du vecteur $s = H\, y$,

3c) calcul de la matrice $\chi(i, j) = d_i^* d_j$ $i, j = 1, ..., m$

3d) addition d'un facteur de préblanchiment $\lambda^2$ :

$$\chi(i, i) \leftarrow \chi(i, i) + \lambda^2 \qquad i = 1, ..., m$$

3e) calcul du vecteur de composantes $k(i) = d_i^* s$

3f) résolution du système linéaire d'ordre m :

$$\sum_{j=1}^{m} r(i, j)\, w(j) = k(i) \qquad\qquad i = 1, ..., m$$

3g) actualisation de $y(n)$ par :

$$y \leftarrow y - \sum_{j=1}^{m} w(j)\, p_j.$$

4) Retour en 2) ou 5) jusqu'à la convergence souhaitée pour a(i)

5) Calcul de u :

$$u = s - \sum_{j=1}^{m} w(j)\, d_j.$$

6) Calcul de e = H* u

7) Calcul de $y_o$ = y - e.

**22.** Procédé selon la revendication 21, caractérisé en ce que l'on prend pour pj les composantes d'un bruit cohérent d'amplitude inconnue.

**23.** Procédé selon la revendication 22, caractérisé en ce que l'on prend :

$p_i(n) = e^{jn\Delta x k_i(f)}$ avec n = 0, ..., N, $k_i(f)$ étant la relation de dispersion vérifiée par le bruit.

**24.** Procédé selon la revendication 21, caractérisé en ce que l'on remplace l'étape 3) par l'étape 3') suivante :

3') Actualisation de y(n) pour le a(i) courant :

3a) initialisation de $y_{it}(n) = y(n)$

3b) calcul de la partie non prédictible e(n) de $y_{it}(n)$

3c) actualisation de $y_{it}(n)$ pour les seuls échantillons n correspondant aux valeurs manquantes (n = l(j) j = 1, ..., m) par :

$$y_{it}(n) \leftarrow (1 - \lambda^2)\, y_{it}(n) + \lambda^2\, y(n) - e(n)$$

3d) retour en 3b) ou 3e) si convergence souhaitée de $y_{it}(n)$

3e) actualisation de y(n) pour les seuls échantillons n correspondant aux valeurs manquantes par :

$$y(n) = y_{it}(n).$$

**25.** Procédé selon la revendication 21, appliqué à la restauration de portions de traces manquantes, caractérisé en ce qu'il comprend les étapes suivantes :

1) Initialisation des données y(t, n)

2) Passage de y(t, n) à Y(f, n) par transformée de Fourier

3) Actualisation de a(f, i) :

3a) pour tout f :

i) y(n) = Y(f, n)

ii) calcul statistique du filtre d'erreur de prédiction a(f, i) pour y(n) et i = 0, ..., p

iii) initialisation de $Y_{it}(f, n) = Y(f, n)$ pour tout n

iv) retour en 3a)i) ou 4) si dernière fréquence.

4) Actualisation de y(t, n) :

4a) initialisation de $y_{it}(t, n) = y(t, n)$

4b) passage de $y_{it}(t, n)$ à $Y_{it}(f, n)$ par transformée de Fourier

4c) pour tout f :

i) $y_{it}(n) = Y_{it}(f, n)$

ii) calcul de la partie non prédictible e(n) de $y_{it}(n)$ au moyen de l'opérateur M(f) calculé à partir des a (f, i) déjà calculés en 3c)

iii) E(f, n) = e(n)
iv) retour en i) ou 4d) si dernière fréquence

4d) passage de E(f, n) en e(t, n) par transformée de Fourier inverse
4e) actualisation de $y_{it}(t, n)$ pour les seuls échantillons (t, n) correspondant aux valeurs manquantes par :

$$y_{it}(t, n) = (1-\lambda^2) \, y_{it}(t, n) + \lambda^2 \, y(t, n) - e(t, n)$$

4f) retour en 4b) ou 4g) si convergence souhaitée de $y_{it}(t, n)$
4g) actualisation de y(t, n) :

$$y(t, n) = y_{it}(t, n)$$

5) Retour en 2) ou 6) si convergence de a(f, i)
6) Obtention des données reconstituées y(t,n) que l'on peut séparer en $y_o(t,n)$ et e(t,n) dans le domaine (f-x).

**26.** Procédé selon la revendication 1, appliqué à l'interpolation de données sismiques, caractérisé en ce qu'il comporte les étapes suivantes, implémentées dans le domaine fréquentiel :

1) Calculer un filtre d'erreur de prédiction A(f) pour les données interpolées,
2) Calculer Z(f) par transformée de Fourier des données connues, supposées régulièrement espacées, en mettant à 0 les données manquantes situées sur une grille m fois plus fine que la grille des données connues, où m est le facteur d'interpolation
3) Construire le filtre d'erreur de prédiction

$$A_Z(f) = A(f + 1/m) \, A(f + 2/m) \, ... \, A(f + (m-1)/m)$$

4) Calculer les données interpolées non débruitées par

$$Y(f) = \frac{|A_z(f)|^2}{R_z(f)} Z(f),$$

$R_z(f)$ étant une autocorrélation précolorisée de $A_z(f)$.

**27.** Procédé selon la revendication 1, appliqué à l'interpolation de données sismiques, caractérisé en ce qu'il comporte les étapes suivantes, implémentées dans le domaine fréquentiel :

1) Calculer un filtre d'erreur de prédiction A(f) pour les données interpolées,
2) Calculer Z(f) par transformée de Fourier des données connues, supposées régulièrement espacées, en mettant à 0 les données manquantes situées sur une grille m fois plus fine que la grille des données connues, où m est le facteur d'interpolation
3) Calculer les données interpolées débruitées par

$$Y_0(f) = Z(f) - \frac{|A(f)|^2}{R(f)} Z(f)$$

**28.** Procédé selon la revendication 1, caractérisé en ce que les étapes des revendications 26 ou 27 sont mises en oeuvre dans le domaine temporel.

**Patentansprüche**

**1.** Seismisches Prospektionsverfahren, bei welchem:

- im Untergrund eine seismische Erschütterung ausgelöst wird,
- mit Hilfe von Fühlern seismische Momentwertdaten $y = [y(0),\ldots,y(N)]^T$, wobei N eine ganze Zahl ist, ermittelt werden, welche ein Signal $y_0$ enthalten, welches in ein zusätzliches Rauschen eingebettet ist, und welches isoliert werden soll,
- in dem Zeit- oder Frequenzbereich eine Filtration der seismischen Daten durchgeführt wird, um gefilterte Daten zu erhalten, in welchen das zu isolierende Signal abwesend ist,
- von den seismischen Anfangsdaten die gefilterten Daten abgezogen werden, um verarbeitete Daten $y_0(0),\ldots,$ $y_0(N)$ entsprechend dem von dem zusätzlichen Rauschen befreiten Signal $y_0$ zu erhalten,
- die so erhaltenen Daten verarbeitet werden, um aus ihnen eine für die Geologie des Untergrundes nützliche Information zu ziehen,

wobei der für die Filtration der seismischen Daten verwendete Filter ein frequentieller, autodekonvolutiver Vorhersagefehlerfilter M(f) wie:

$$M(f) = |A(f)|^2/R(f),$$

oder ein äquivalenter Filter in dem Zeitbereich ist,

wobei A(f) das Spektrum eines Vorhersagefehlerfilters $a$ mit p+1 Koeffizienten a(0),\ldots,a(p) ist, wobei p eine ganze Zahl ist, welche kleiner als N ist, und wobei $a$ vorab gewählt wird, um das Signal $y_0$, welches isoliert werden soll, am besten durch Faltung zu löschen,
wobei R(f) eine verschönerte Autokorrelation dieses Vorhersagefilters $a$ ist, welche verifiziert:

$$R(f) = |A(f)|^2 + \varepsilon^2 |B(f)|^2,$$

wobei $\varepsilon$ und B(f) jeweils ein in Abhängigkeit von der für die Filtration gewünschten Selektivität vorab ausgewählter Faktor und Verschönerungsfilter sind.

2. Verfahren gemäß Anspruch 1, dadurch gekennzeichnet, daß der autodekonvolutive Vorhersagefehlerfilter fiir seismische Daten, welche nahe der Ränder liegen, nicht stationär ist.

3. Verfahren gemäß Anspruch 1, dadurch gekennzeichnet, daß die p+1 Koeffizienten a(0), a(1),\ldots, a(p) des Vorhersagefehlerfilters $a$ auf deterministische Weise ausgehend von bekannten physikalischen Parametern des Signals $y_0$, welches isoliert werden soll, berechnet werden.

4. Verfahren gemäß Anspruch 3, bei welchem das Signal $y_0$ ein Spektrum $Y_0(f)$ aufweist, welches von p Frequenzlinien $f_q$ (q = 1,\ldots,p) gebildet ist, dadurch gekennzeichnet, daß die Koeffizienten a(0), a(l), ..., a(p) des Vorhersagefehlerfilters $a$ berechnet werden durch

$$a(i) = a_1(i) * a_2(i) * \ldots * a_p(i)$$

$$a(0) = 1$$

mit

$$a_q(0) = 1$$

$$a_q(1) = - e^{-2j\pi fq}$$

5. Verfahren gemäß Anspruch 3, bei welchem das Signal $y_0$ ein Spektrum $Y_0(f)$ aufweist, dessen Grundrauschen wenigstens ein Frequenzintervall

$$[f_q - \Delta f_q, f_q + \Delta f_q]$$

aufweist, wobei $\Delta f_q$ die halbe Breite wie das auf der Frequenz $f_q$ zentrierte Intervall aufweist, dadurch gekennzeichnet, daß die Koeffizienten $a(0)$, $a(1)$, ..., $a(p)$ des Vorhersagefehlerfilters *a mit* dem Spektrum $A(f)$ mit einem Verfahren der kleinsten Fehlerquadrate bestimmt werden, wobei das Integral $\int_0 W(f) |A(f)|^2 \, df$ minimiert wird, mit $a(0) = 1$ und $W(f)$ einer Funktion, welche 1 ist, wenn die Frequenz f in einem Frequenzintervall liegt, wo das Spektrum $Y_0(f)$ nicht Null ist und 0 woanders liegt.

6. Verfahren gemäß Anspruch 3, bei welchem das Signal $y_0$ ein Spektrum $Y_0(f)$ aufweist, dessen Grundrauschen Q Frequenzintervalle

$$[f_q - \Delta f_q, f_q + \Delta f_q] \qquad q = 1, ....., Q$$

aufweist, wobei $\Delta f_q$ die halbe Breite wie das auf der Frequenz $f_q$ zentrierte Intervall aufweist, dadurch gekennzeichnet, daß die Koeffizienten des Vorhersagefehlerfilters *a* bestimmt werden durch

$$a(i) = a_1(i) * a_2(i) * ... * a_Q(i)$$

mit

$$a_q(i) = s_q(i) / s_q(0) \qquad \text{für } q = 1, ....., Q$$

wobei die Koeffizienten $s_q(i)$, $i = 0, ....., p_q$ durch die Funktion

$$S_q(f) = e^{-j\pi fp} \, T_{pq}[\sin(\pi(f-f_q)) / \sin(\pi\Delta f_q)] = \Sigma \, s_q(m) \, e^{-j2\pi mf}$$

festgelegt werden, wobei $T_{pq}$ das Tschebytschowsche Polynom der ersten Art und der Ordnung pq ist, und dadurch, daß die verschönerte Autokorrelation berechnet wird durch:

$$r(i) = r_1(i) * r_2(i) * ... * r_Q(i)$$

mit

$$r_q = a_q(i) * \overline{a_q(-i)} + \varepsilon_q^2 \delta(i)$$

und

$$\varepsilon_q \gg \frac{1}{S_q(0)}$$

7. Verfahren gemäß Anspruch 1, dadurch gekennzeichnet, daß die Filtration in dem Frequenzbereich daraus besteht, die seismischen Daten $y(0), ....., y(N)$ mit dem Filter $M(f)$ zu multiplizieren.

8. Verfahren gemäß Anspruch 1, dadurch gekennzeichnet, daß in dem Fall einer Filtration in dem Zeitbereich die entsprechende verschönerte Autokorrelation $r(i)$ in dem Zeitbereich zu $R(f)$ und wie folgt berechnet wird:

$$r(i) = a(i) * \overline{a(-i)} + \varepsilon^2 \, b(i) * \overline{b(-i)}$$

wobei *b* der zu $B(f)$ in dem Zeitbereich äquivalente Verschönerungsfilter ist.

9. Verfahren gemäß Anspruch 8, dadurch gekennzeichnet, daß die Filtration durch den autodekonvolutiven Vohersagefehlerfilter die folgenden Schritte aufweist:

1) Berechnung eines Filters g(i) wie $r(i) * \overline{g(-i)} * g(i) = \delta(i)$
2) Berechung durch nicht-rekursive Filtration für n, welches von 0 bis N von e(n) variiert, gemäß:

$$e(n) = \overline{a(-i)} * \overline{g(-i)} * g(i) * a(i) * y(n),$$

wobei e(n) das zusätzliche Rauschen ist.

10. Verfahren gemäß Anspruch 8, dadurch gekennzeichnet, daß die Filtration durch den autodekonvolutiven Vorhersagefehlerfilter die folgenden Schritte aufweist:

1) Berechnung des Filters c(i) gemäß $c(i) * \overline{c(-i)} = r(i)$
2) Berechnung durch aufsteigende rekursive Filtration für n, welches von 0 bis N von u(n) variiert, gemäß:

$$u(n) = \left[\frac{a(i)}{c(i)}\right] * y(n)$$

3) Berechnung durch absteigende rekursive Filtration für n, welches von 0 bis N von e(n) variiert, gemäß:

$$e(n) = \left[\frac{\overline{a(-i)}}{\overline{c(-i)}}\right] * u(n)$$

wobei e(n) das zusätzliche Rauschen ist.

11. Verfahren gemäß Anspruch 8, dadurch gekennzeichnet, daß die Anwendung des autodekonvolutiven Vorhersagefehlerfilters auf die Daten die folgenden Schritte aufweist:

1) Berechnung eines nicht stationären Filters G ausgehend von der verschönerten Autokorrelation r(i), wobei G gleich $G^* G = R^{-1}$ ist, wobei R die ausgehend von r(i) gebildete Toeplitz-Matrix ist
2) Berechnung durch stationäre nicht-rekursive Filtration von s = Ay *entsprechend*

$$s(n) = a(i) * y(n)$$

3) Berechnung durch nicht-stationäre nicht-rekursive Filtration von u = Gs
4) Berechnung durch nicht-stationäre nicht-rekursive Filtration von v = G* u
5) Berechnung durch stationäre nicht-rekursive Filtration von e = A'v entsprechend

$$e(n) = \overline{a(-i)} * v(n)$$

wobei e(n) das zusätzliche Rauschen ist.

12. Verfahren gemäß Anspruch 8, dadurch gekennzeichnet, daß die Anwendung des autodekonvolutiven Vorhersagefehlerfilters auf die seismischen Daten die folgenden Schritte aufweist:

1) Berechnung des nicht-stationären Filters C ausgehend von der verschönerten Autokorrelation r(i), wobei C gleich CC\*= R ist, wobei R die ausgehend von r(i) gebildete Toeplitz-Matrix ist

2) Berechnung durch stationäre nicht-rekursive Filtration von s = Ay entsprechend

$$s(n) = a(i) * y(n)$$

3) Berechnung durch nicht-stationäre rekursive Filtration von $u = C^{-1}s$

4) Berechnung durch nicht-stationäre rekursive Filtration von $u = C^{-1}*u$

5) Berechnung durch stationäre nicht-rekursive Filtration von e = A\*v entsprechend

$$e(n) = a(-i) * v(n)$$

wobei e(n) das zusätzliche Rauschen ist.

13. Verfahren gemäß Anspruch 1, dadurch gekennzeichnet, daß die p+1 Koeffizienten a(0), a(1), ...., a(p) des Vorhersagefehlerfilters *a* statistisch durch aufeinanderfolgende Iterationen durch eine Minimierung einer von *a* und den seismischen Daten y abhängigen Norm berechnet werden.

14. Verfahren gemäß Anspruch 13, dadurch gekennzeichnet, daß die p+1 Koeffizienten a(0), a(1), ....., a(p) mit dem folgenden Verfahren berechnet werden:

1) Berechnung von Y(f) durch die Fourier-Transformation der Daten y(n)

2) Wahl eines Anfangsvorhersagefehlerfilters a mit den Koeffizienten a(0) = 1, a(1), ....., a(p)

3) Berechnung von A(f) durch die Fourier-Transformation von a(i)

4) Berechnung von $UU(f) = [Y(f)|^2 / [|A(f)|^2 + \varepsilon^2 |B(f)|^2]$

5) Berechnung von uu(i) durch die inverse Fourier-Transformation von UU(f)

6) Berechnung von a(i) durch Auflösung des mit uu(i) gebildeten Toeplitz-Gleichungssystems

7) Rückkehr zu Schritt 2) bis zu der gewünschten Konvergenz der Werte a(i).

15. Verfahren gemäß den Ansprüchen 8 und 13, dadurch gekennzeichnet, daß die p+1 Koeffizienten a(0), a(1) a(p) mit dem folgenden Verfahren berechnet werden: werden:

1) Wahl eines Anfangsvorhersagefehlerfilters *a* mit den Koeffizienten a(0) = 1, a(1), ...., a(p)

2) Berechnung der verschönerten Autokorrelation $r(i) = a(i) * \overline{a(-i)} + \varepsilon^2 b(i) * \overline{b(-i)}$

3) Berechnung von g(i) ausgehend von r(i), wobei g(i) gleich $r(i) * g(i) * \overline{g(-i)} = \delta(i)$ ist, mit 6(i) = 1 wenn i = 0 und $\delta(i) = 0$ wenn nicht

4) Berechnung von $u(n) = g(i) * y(n)$

5) Berechnung der Kovarianzmatrix $COV_u$ von u(n)

$$COV_u(i,j) = \sum_{n = max(i,j)}^{n = N - min(i,j)} \overline{u(n-i)}\, u(n-j)$$

$$mit\ i = 0, ....., p$$
$$und\ j = 0, ....., p$$

6) Berechnung von h(0), ...., h(p), welche verifizieren

$$COV_u h = [i, 0, ....., 0]*$$

7) Berechnung von a(i) durch Normalisierung von h(i):

$$a(i) = h(i) / h(0)$$

8) Rückkehr zu Schritt 2 bis zur gewünschten Konvergenz der Werte a(i).

**16.** Verfahren gemäß den Ansprüchen 8 und 13, dadurch gekennzeichnet, daß die p+1 Koeffizienten a(0), a(1), ...., a(p) mit dem folgenden Verfahren berechnet werden:

1) Wahl eines Anfangsvorhersagefehlerfilters *a* mit den Koeffizienten a(0) = 1, a(1), ....., a(p)

2) Berechnung der verschönerten Autokorrelation $r(i) = a(i) * \overline{a(-i)} + \varepsilon^2 b(i) * \overline{b(-i)}$ wobei b(i) ein Verschönerungsfilter ist

3) Berechnung des abgeschwächten Vorhersagefehlerfilters c(i) ausgehend von r(i) durch ein iteratives, rekursives, zeitliches Filtrationsverfähren

4) Berechnung durch rekursive Filtration von u(0), ..., u(N) durch

$$u(n) = \left[\frac{y(n)}{c(i)}\right]$$

5) Berechung der Kovarianzmatrix $COV_u$ von u(n)

$$COV_u(i,j) = \sum_{n = max(i,j)}^{n = N - min(i,j)} u(n-i)\,u(n-j)$$

$$\text{für } i = 0, ....., p$$
$$\text{und } j = 0, ....., p$$

6) Berechnung des Vektors h mit den Komponenten h(0), ...., h(p), welcher verifiziert

$$COV_u h = [1, 0, ...., 0]^*$$

7) Berechnung von a(i) durch Normalisierung von h(i):

$$a(i) = h(i) / h(0)$$

8) Rückkehr zu Schritt 2 bis zur gewünschten Konvergenz der Werte a(i).

**17.** Verfahren gemäß den Ansprüchen 8 und 13, dadurch gekennzeichnet, daß die p+1 Koeffizienten a(0), a(1), ...., a(p) mit dem folgenden Verfahren berechnet werden:

1) Wahl der p+1 Anfangskoeffizienten a(i)

2) Berechnung des nicht-stationären Filters G ausgehend von der verschönerten Autokorrelation r(i), wobei G gleich $G*G = R^{-1}$ ist, wobei R die ausgehend von r(i) gebildete Toeplitz-Matrix ist

3) Berechnung durch nicht-stationäre nicht-rekursive Filtration der p+1 Vektoren

$$u_i : u_i = Gy_i$$

4) Berechnung der Kovarianzrnatrix von $u_i$ : $COV_u(ij) = ui^* uj$

5) Auflösung von

$$\sum_{j=0}^{p} COV_u(i,j)\, h(j) = \delta(i),\ i = 0, \dots, p\ \text{mit}\ \delta(1) = 0\ \text{und}\ \delta(i) = 0\ \text{für}\ i = 1, \dots, p$$

6) Berechnung von $a(i) = h(i) / h(0)$  $i = 0, \dots, p$
7) Rückkehr zu Schritt 2 bis zur gewünschten Konvergenz der Werte $a(i)$
8) Ende

**18.** Verfahren gemäß den Ansprüchen 8 und 13, dadurch gekennzeichnet, daß die $p+1$ Koeffizienten $a(0), a(1), \dots, a(p)$ mit dem folgenden Verfahren berechnet werden:

1) Wahl der $p+1$ Anfangskoeffizienten $a(i)$
2) Berechnung des nicht-stationären Filters C ausgehend von der verschönerten Autokorrelation $r(i)$, wobei C gleich $CC^* = R$ ist, wobei R die ausgehend von $r(i)$ gebildete Toeplitz-Matrix ist
3) Berechnung durch nicht-stationäre rekursive Filtration der $p+1$ Vektoren $u_i$, wie

$$u_i = C^{-1} y_i$$

mit

$$y_i = [y(p\text{-}i), \dots, y(N\text{-}i)]^T\ \text{für}\ i = 0\ \text{bis}\ p$$

4) Berechnung der Kovarianzmatrix von $u_i$ : $COV_u(i,j) = u_i^*\, u_j$
5) Auflösung von

$$\sum_{j=0}^{p} COV_u(i,j)\, h(j) = \delta(i),\ i = 0, \dots, p\ \text{mit}\ \delta(1) = 0\ \text{und}\ \delta(i) = 0\ \text{für}\ i = 1, \dots, p$$

6) Berechnung von $a(i) = h(i) / h(0)$     $i = 0, \dots, p$
7) Rückkehr zu Schritt 2 bis zur gewünschten Konvergenz der Werte $a(i)$
8) Ende

**19.** Verfahren gemäß den kombinierten Ansprüchen 2, 3, 6, 8, 12, dadurch gekennzeichnet, daß es die folgenden Schritte aufweist:

1) Festlegung durch den Benutzer eines Bereiches der Ebene f=k, welche das zu isolierende Signal $y_0$ enthält,
2) Für jeden Wert der Raumvariablen x Durchführung der Fourier-Transformation der Daten $y(t, x)$ der Zeitvaraiblen t, um transformierte Daten $Y(f, x)$ in der Ebene f-x zu erhalten,
3) für jede Frequenz fder Ebene f-x

    3a) Nehmen von

$$y(n) = Y(f,n)$$

    3b) Festlegung der Intervalle für die Variable k, welche das voraussagbare Signal $y_0$ enthält, welches isoliert werden soll, indem ein Schnitt bei der für den Bereich konstanten f vorgenommen wird,
    3c) Berechnung des elementaren, räumlichen Vorhersagefehlerfilters (Variable x) entsprechend jedem dieser Intervalle in k fiir ein gegebenes ε,

3d) Berechnung des globalen Vorhersagefehlerfilters a(i) und der entsprechenden verschönerten Autokorrelation r(i),

3e) Berechnung des nicht-stationären Vorhersagefehlerfilters ep(j,i) ausgehend von der verschönerten Autokorrelation r(i),

3f) Berechnung des nicht voraussagbaren Teils e(n) der Daten durch nicht-stationäre rekursive Filtration mit Hilfe der Koeffizienten ep(j,i),

3g) Abziehen des nicht voraussgabaren Teils e(n) von den Daten y(n), um den voraussagbaren Teil $y_0$(n) zu erhalten,

3h) Rückkehr zu Schritt 3a) für die folgende Frequenz f, außer wenn die letzte Frequenz der Ebene f-x erreicht ist.

4) Für jedes x Durchführung der inversiven Fourier-Transformation der Variablen f von e(n) oder von $y_0$(n), um in die Ebene t-x zurückzukehren.

**20.** Verfahren gemäß den Ansprüchen 2, 8, 12, 13 und 16, dadurch gekennzeichnet, daß es die folgenden Schritte aufweist:

1) Für jedes x die Fourier-Transformation der seismischen Daten y(t, x) für die Variable t, um sich in der Ebene f-x anzuordnen

2) Für jede Frequenz f der Ebene f-x:

2a) Nehmen von y(n) = Y(f, n)

2b) Wahl einer Länge p für den Vorhersagefehlerfilter, eines Faktors ε und eines Verschönerungsfilters b (0), ....., b(q), sowie einer Anzahl von Iterationen für die Konvergenz von a(i)

2c) Berechnung durch ansteigende rekursive Filtration von:

$$u(n) = \left[ \frac{y(n)}{c(i)} \right]$$

wobei c(i) der um die vorausgehende Iteration abgeschwächte Vorhersagefehlerfilter ist (derjenige der letzten Iteration der vorausgehenden Frequenz, wenn es sich um die erste Iteration für die in der Iteration befindlichen Frequenz handelt)

2d) Berechnung der Kovarianz- oder der Korrelationsmatrix von u(n)

2e) Auflösung des Systems, um die Koeffizienten a(i) des Vorhersagefehlerfilters zu erhalten,

2f) Berechnung der verschönerten Autokorrelation r(i) und des abgeschwächten Vorhersagefehlerfilters c(i)

2g) Rückkehr zu 2c) bis zur gewünschten Konvergenz der Werte von a(i)

2h) Erhalt des nicht voraussagbaren Teils e(n) der Daten durch nicht-stationäre rekursive Filtration

2i) Abziehen des nicht voraussagbaren Teils e(n) von den Daten y(n), um den voraussagbaren Teil $y_0$(n) zu erhalten

2j) Rückkehr zu 2a), wenn es sich nicht um die letzte Frequenz handelt.

3) Für jedes x Durchführung der inversiven Fourier-Transformation von $y_0$(n) der Variablen t, um $y_0$(t, x) zu erhalten.

**21.** Verfahren gemäß Anspruch 1, welches auf die Wiederherstellung von Daten angewandt wird, welche fehlende Indexwerte l(j) aufweisen, wobei j zwischen 1 und m liegt, dadurch gekennzeichnet, daß es die folgenden Schritte aufweist:

1) Initialisierung der wiederherzustellenden Daten y(n)

2) Berechnung des Vorhersagefehlerfilters a(i) für das laufende y(n)

3) Aktualisierung von y(n) für das laufende a(i):

3a) Berechnung von m Vektoren $d_j = H p_j$     $j = 1, ..., m$

wobei $p_j$ ein Vektor ist, welcher die Impulsantwort des jsten Impulsrauschens entsprechend dem fehlenden jsten Indexwertes I(j) enthält,
wobei H der lineare Operator wie $M = H^* H$ ist, wobei M der Operator ist, welcher ermöglicht, das Rauschen e ausgehend von den Daten y zu berechnen

3b) Berechnung des Vektors $s = H y$,
3c) Berechnung der Matrix $\chi(i,j) = d_i^* d_j$     $i,j = 1,....., m$
3d) Addition eines Vorbleichfabors $\lambda^2$ :

$$\chi(i,i) \leftarrow \chi(i,i) + \lambda^2 \qquad i = 1, ....., m$$

3e) Berechnung des Vektors mit den Komponenten $k(i) = d_i^* s$
3f) Auflösung des linearen Systems der Ordnung m:

$$\sum_{j=1}^{m} r(i,j)\, w(j) = k(i) \qquad\qquad i = 1, ....., m$$

3g) Aktualisierung von y(n) durch:

$$y \leftarrow y - \sum_{j=1}^{m} w(j)\, p_j.$$

4) Rückkehr zu 2) oder 5) bis zur gewünschten Konvergenz für a(i)
5) Berechnung von u:

$$u = s - \sum_{j=1}^{m} w(j)\, d_j.$$

6) Berechnung von $e = H^* u$
7) Berechnung von $y_0 = y - e$.

22. Verfahren gemäß Anspruch 21, dadurch gekennzeichnet, daß für $p_j$ die Komponenten eines kohärenten Rauschens von unbekannter Amplitude genommen werden.

23. Verfahren gemäß Anspruch 22, dadurch gekennzeichnet, daß man nimmt: $p_i(n) = e^{jn\Delta x k i(f)}$ mit $n = 0, ....N$, wobei $k_i(f)$ die von dem Rauschen verifizierte Dispersionsrelation ist.

24. Verfahren gemäß Anspruch 21, dadurch gekennzeichnet, daß Schritt 3) durch den folgenden Schritt 3') ersetzt wird:

3') Aktualisierung von y(n) für das laufende a(i):

3a) Initialisierung von $y_{it}(n) = y(n)$
3b) Berechnung des nicht voraussagbaren Teils e(n) von $y_{it}(n)$

3c) Aktualisierung von $y_{it}(n)$ für die einzigen Proben n, welche den fehlenden Werten (n = l(j) j = 1, ...., m) entsprechen, durch:

$$y_{it}(n) \leftarrow (1 - \lambda^2) y_{it}(n) + \lambda^2 y(n) - e(n)$$

3d) Rückkehr zu 3b) oder 3e), wenn die gewünschte Konvergenz von $y_{it}(n)$ besteht
3e) Aktualisierung von y(n) für die einzigen Proben n, welche den fehlenden Werten entsprechen, durch:

$$y(n) = y_{it}(n).$$

**25.** Verfahren gemäß Anspruch 21, welches auf die Wiederherstellung von fehlenden Spurbereichen angewandt wird, dadurch gekennzeichnet, daß es die folgednen Schritte aufweist:

1) Initialisierung der Daten y(t, n)
2) Übergang von y(t, n) zu Y/f, n) durch Fourier-Transformation
3) Aktualisierung von a(f, i):
3a) für jedes f:

i) y(n) = Y(f, n)
ii) statistische Berechnung des Vorhersagefehlerfilters a(f, i) für y(n) und i= 0, ...., p
iii) Initialisierung von $Y_{it}(( n) = Y(f, n)$        für jedes n
iv) Rückkehr zu 3a)i) oder 4) wenn es sich um die letzte Frequenz handelt.

4) Aktualisierung von y(t, n):

4a) Initialisierung von $y_{it}(t, n) = y(t, n)$
4b) Übergang von $y_{it}(t, n)$ zu $Y_{it}(( n)$ durch Fourier-Transformation
4c) für jedes f:

i) $y_{it}(n) = Y_{it}(f, n)$ :
ii) Berechnung des nicht voraussagbaren Teils e(n) von $y_{it}(n)$ mittels des Operators M(f), welcher ausgehend von den bereits in 3c) berechneten a(f, i) berechnet wird
iii) E(f, n) = e(n)
iv) Rückkehr zu i) oder 4d), wenn es sich um die letzte Frequenz handelt.

4d) Übergang von E(f, n) zu e(t, n) durch inverse Fourier-Transformation
4e) Aktualisierung von $y_{it}(t, n)$ für die einzigen Proben (t, n), welche den fehlenden Werten entsprechen, durch:

$$y_{it}(t, n) = (1-\lambda^2)y_{it}(t, n) + \lambda^2 y(t, n) - e(t, n)$$

4f) Rückkehr zu 4b) oder 4g) bei gewünschter Konvergenz von $y_{it}(t, n)$
4g) Aktualisierung von y(t, n):

$$y(t, n) = y_{it}(t, n)$$

5) Rückkehr zu 2) oder 6) bei Konvergenz von a(f, i)
6) Erhalt der wiederhergestellten Daten y(t, n), welche in $y_0(t,n)$ und e(t,n) in dem Bereich (f-x) unterteilt werden können.

**26.** Verfahren gemäß Anspruch 1, welches auf die Interpolation von seismischen Daten angewandt wird, dadurch gekennzeichnet, daß es die folgenden, in dem Frequenzbereich implementierten Schritte aufweist:

1) Berechnung eines Vorhersagefehlerfilters A(f) für die interpolierten Daten,

2) Berechnung von Z(f) durch Fourier-Transformation der bekannten Daten, welche als regelmäßig beabstandet angenommen werden, indem die fehlenden Daten auf 0 gesetzt werden, welche auf einem m-mal feineren Raster angeordnet sind als das Raster der bekannten Daten, wobei m der Interpolationsfaktor ist
3) Herstellung des Vorhersagefehlerfilters

$$A_z(f) = A(f+ 1/m) \, A(f+ 2/m) \, .... \, A(f+ (m-1)/m)$$

4) Berechnung der interpolierten, nicht vom Rauschen befreiten Daten durch

$$Y(f) = \frac{|A_z(f)|^2}{R_z(f)} Z(f),$$

wobei $R_z(f)$ eine verschönerte Autokorrelation von $A_z(f)$ ist.

27. Verfahren gemäß Anspruch 1, welches auf die Interpolation von seismischen Daten angewandt wird, dadurch gekennzeichnet, daß es die folgenden, in dem Frequenzbereich implementierten Schritte aufweist:

1) Berechnung eines Vorhersagefehlerfilters A(f) für die interpolierten Daten
2) Berechnung von Z(f) durch Fourier-Transformation der bekannten Daten, welche als regelmäßig beabstandet angenommen werden, indem die fehlenden Daten auf 0 gesetzt werden, welche auf einem m-mal feineren Raster angeordnet sind als das Raster der bekannten Daten, wobei m der Interpolationsfaktor ist
3) Berechnung der interpolierten, vom Rauschen befreiten Daten durch

$$Y_0(f) = Z(f) - \frac{|A(f)|^2}{R(f)} Z(f)$$

28. Verfahren gemäß Anspruch 1, dadurch gekennzeichnet, daß die Schritte der Ansprüche 26 oder 27 in dem Zeitbereich eingesetzt werden.

## Claims

1. A seismic prospection method in which:

- a seismic disturbance is caused to take place in the sub-soil;
- sensors are used to pick up sampled seismic data $y = [y(0), ..., y(N)]^T$ where N is an integer, said data containing a signal $y_0$ that is to be isolated and that is embedded in additive noise;
- the seismic data is subjected to filtering in the time domain or the frequency domain to obtain filtered data in which the signal to be isolated is absent;
- the filter data is subtracted from the initial seismic data to obtain processed data $y_0(0), ..., y_0(N)$ corresponding to the signal $y_0$ without additive noise;
- the data acquired in this way is processed to deduce therefrom useful information about the geology of the sub-soil;

the filter used for filtering the seismic data being a self-deconvoluted prediction error frequency filter M(f) such that:

$$M(f) = |A(f)|^2/R(f)$$

or an equivalent filter in the time domain,

A(f) being the spectrum of a prediction error filter $a$ having p+1 coefficients $a(0), ..., a(p)$ where $\underline{p}$ is an integer smaller than N, $\partial$ being previously selected for best cancelling by convolution of the signal $y_0$ that is to be isolated,

R(f) being a precolorized self-correlation of said prediction filter $\partial$ satisfying:

$$R(f) = |A(f)|^2 + \varepsilon^2 |B(f)|^2$$

where $\varepsilon$ and B (f) are respectively a precolorization factor and a precolorization filter previously selected as a function of the selectivity desired for the filtering.

2. A method according to claim 1, characterized in that the self-convoluted prediction error filter is non-steady for seismic data close to the edges.

3. A method according to claim 1, characterized in that the p+1 coefficients a(0), a(1), ..., a(p) of the prediction error filter $\partial$ are computed deterministically from known physical parameters of the signal $y_0$ that is to be isolated.

4. A method according to claim 3, in which the signal $y_0$ has a spectrum $Y_0(f)$ constituted by frequency lines $f_q$ (q = 1, ..., ..., p), characterized in that the coefficients a(0), a(1), ..., a(p) of the prediction error filter $\partial$ are computed by:

$$a(i) = a_1(i) * a_2(i) * ... * a_p(i)$$

$$a(0) = 1$$

with

$$a_q(0) = 1$$

$$a_q(1) = -e^{-2j\pi fq}$$

5. A method according to claim 3, in which the signal $y_0$ has a spectrum $Y_0(f)$ whose medium includes at least one frequency range

$$[f_q - \Delta f_q, f_q + \Delta f_q]$$

where $\Delta f_q$ is the half-width of the range centered on the frequency $f_q$, characterized in that the coefficients a(0), a (1), ..., a(p) of the prediction error filter $\partial$ of spectrum A(f) are determined by a least squares method by minimizing the integral $\int_0 W(f) |A(f)|^2 df$ with a(0) = 1 and W(f) being a function equal to 1 when $\underline{f}$ lies in a range of frequencies where the spectrum $Y_0(f)$ is not zero, and 0 elsewhere.

6. A method according to claim 3, in which the signal $y_0$ has a spectrum $y_0(f)$ whose medium includes Q frequency ranges

$$[f_q - \Delta f_q, f_q + \Delta f_q] \qquad q = 1, ..., Q$$

$\Delta f_q$ being the half-width of a range centered on the frequency $f_q$, characterized in that the coefficients of the prediction error $\partial$ are determined by

$$a(i) = a_1(i) * a_2(i) * ... * a_Q(i)$$

with

$$a_q(i) = s_q(i)/s_q(0) \qquad \text{for } q = 1, ..., Q$$

the coefficient $s_q(i)$, $i = 0, ...., p_q$ being determined by the relationship

$$S_q(f) = e^{-j\pi fp} \, T_{pq}[\sin(\pi(f-f_q))/\sin(\pi\Delta f_q)]$$

$$= \Sigma s_q(m)e^{-j2\pi mf}$$

where $T_{pq}$ is the Chebyshev polygonal of the first kind and of order $p_q$ and in that the precolorized self-correlation is computed by:

$$r(i) = r_1(i) \, {}^* \, r_2(i) \, {}^* \, ... \, {}^* \, r_Q(i)$$

with

$$r_q(i) = a_q(i) \, {}^* \, \overline{a_q(-i)} + \varepsilon^2\delta(i)$$

and

$$\varepsilon_q \gg 1/s_q(0).$$

7. A method according to claim 1, characterized in that the filtering consists, in the frequency domain, in multiplying the seismic data $y(0), ..., y(N)$ by the filter $M(f)$.

8. A method according to claim 1, characterized in that when filtering in the time domain, the precolorized self-correlation is computed of $r(i)$ corresponding in the time domain to $R(f)$ and such that:

$$r(i) = a(i) \, {}^* \, \overline{a(-i)} + \varepsilon^2 b(i) \, {}^* \, \overline{b(-i)}$$

where $b$ is the precolorization filter equivalent to $B(f)$ in the time domain.

9. A method according to claim 3, characterized in that the filtering by the self-convoluted prediction error filter includes the following steps:

   1) computing a filter $g(i)$ such that

   $$r(i) \, {}^* \, \overline{g(-i)} \, {}^* \, g(i) = \delta(i);$$

   2) using non-recursive filtering to compute $e(n)$ for $\underline{n}$ over the range 0 to N, as follows:

   $$e(n) = \overline{a(-1)} \, {}^* \, \overline{g(-i)} \, {}^* \, g(i) \, {}^* \, a(i) \, {}^* \, y(n)$$

   $e(n)$ being additive noise.

10. A method according to claim 8, characterized in that the filtering by the self-convoluted prediction error filter includes the following steps:

    1) computing the filter $c(i)$ such that $c(i) \, {}^* \, \overline{c(-i)} \approx \rho(i)$;
    2) computing $u(n)$ by up recursive filtering for $\underline{n}$ over the range 0 to N as follows:

$$u(n) = \left[\frac{a(i)}{c(i)}\right] * y(n)$$

3) computing e(n) by down recursive filtering for n over the range 0 to N as follows:

$$e(n) = \left[\frac{\overline{a(-i)}}{\overline{c(-i)}}\right] * u(n)$$

e(n) being additive noise.

11. A method according to claim 8, characterized in that applying the self-convoluted prediction error filter to data includes the following steps:

1) computing a non-steady filter G from the precolorized self-correlation r(i), where G is such that $G^* G \approx R^{-1}$, R being the Toeplitz matrix formed from r(i);
2) using steady non-recursive filtering to compute s = Ay corresponding to s(n) = a(i) * y//(n) ;
3) using non-steady non-recursive filtering to compute u = Gs;
4) using non-steady non-recursive filtering to compute v = $G^*$ u;
5) using steady non-recursive filtering to compute e = $A^*$ v corresponding to e(n) = $\overline{a(-i)}^*$ v(n) e(n) being additive noise.

12. A method according to claim 8, characterized in that the application of the self-convoluted prediction error filter to seismic data includes the following steps:

1) computing the non-steady filter C from the precolorized self-correlation r(i), C being such that $CC^* = R$, R being the Toeplitz matrix formed from r(i);
2) using steady non-recursive filtering to compute s = Ay corresponding to s(n) = a(i) * y(n) ;
3) using non-steady recursive filtering to compute u = $C^{-1}$s;
4) using non-steady recursive filtering to compute v = $C^{-1*}$ u;
5) using steady non-recursive filtering to compute e = $A^*$ v corresponding to e(n) = $\overline{a(-i)}$ * v(n) e(n) being additive noise.

13. A method according to claim 1, characterized in that the p+1 coefficients a(0), a (1) ..., a(p) of the prediction error filter ∂ are computed statistically by successive iterations, by minimizing a norm depending on ∂ and seismic data y.

14. A method according to claim 13, characterized in that the p+1 coefficients a(0), a(1), ..., a(p) are computed by the following process:

1) computing Y(f) by a Fourier transform of the data y(n);
2) selecting an initial prediction error filter d of coefficients a(0) = 1, a(1) ..., a(p);
3) computing A(f) by a Fourier transform of a(i) ;
4) computing UU(f) = $|Y(f)|^2/[|A(f)|^2 + \varepsilon^2|B(f)|^2]$;
5) computing uu(i) by an inverse Fourier transform of UU(f) ;
6) computing a(i) by solving the system of Toeplitz equations formed it uu(i);
7) returning to step 2) until reaching the desired convergence for the values a(i).

15. A method according to claims 8 and 13, characterized in that the p+1 coefficients a(0), a(1), ..., a(p) are computed by the following process:

1) selecting an initial prediction error filter d having coefficients a (0) = 1, a(1), .., a (p) ;
2) computing the precolorized self-correlation r(i) = a(i) * $\overline{a(-i)}$ + $\varepsilon^2$b(i) * $\overline{b(-i)}$;
3) computing g(i) from r(i), g(i) being such that r(i) * g(i) * $\overline{g(-i)}$ ≈ δ(i) with δ(i) = 1 if i = 0 and δ(i) = 0 otherwise;
4) computing u(n) = g(i) * y(n);
5) computing the covariance matrix $COV_u$ of u(n)

$$COV_u(i,j) = \sum_{n=max(i,j)}^{n=N-min(i,j)} \overline{u(\nu-i)} u(n-j)$$

$$\text{with } i = 0, \ldots, p$$
$$\text{and } j = 0, \ldots, p$$

6) computing h(0), ..., h(p) satisfying

$$COV_u h = [1, 0, ..., 0]^* ;$$

7) computing a(i) by normalizing h(i) :

$$a(i) = h(i)/h(0);$$

8) returning to step 2) until reaching the desired convergence of the values a(i).

**16.** A method according to claims 8 and 13, characterized in that the p+1 coefficients a(0), a(1), ..., a(p) are computed by the following processing:

1) selecting an initial prediction error filter $\partial$ of coefficients a(0), a(1), ..., a(p);
2) computing the precolorized self-correlation r(i) = a(i) * $\overline{a(-1)}$ + $\varepsilon^2$ b(i) * $\overline{b(-1)}$ where b(i) is a precolorization filter;
3) computing the damped prediction error filter c(i) from r(i) by an iterative process of recursive time filtering;
4) computing u(0), ..., u(N) by recursive filtering using:

$$u(n) = [\frac{y(n)}{c(i)}]$$

5) computing the covariance matrix $COV_u$ of u(n)

$$COV_u(i,j) = \sum_{n=max(i,j)}^{n=N-min(i,j)} \overline{u(\nu-i)} u(n-j)$$

$$\text{for } i = 0, \ldots, p$$
$$\text{and } j = 0, \ldots, p$$

6) computing the vector $\underline{h}$ of components h(0), ..., h(p) satisfying

$$COV_u h = [1, 0, ..., O)]^* ;$$

7) computing a(i) by normalizing h(i) :

$$a(i) = h(i)/h(0);$$

8) returning to step 2) until reaching the desired convergence for values a(i).

**17.** A method according to claims 8 and 13, characterized in that p+1 coefficients a(0), a(1), ..., a(p) are computed by the following process:

1) selecting p+1 initial coefficients a(i);

2) computing the non-steady filter G from the precolorized self-correlation r(i), G being such that $G^* G \approx R^{-1}$, R being the Toeplitz matrix formed from r(i);

3) using non-steady non-recursive filtering to compute the p+1 vectors $u_i$: $u_i = Gy_i$;

4) computing the covariance matrix of $u_i$:

$$COV_u(i,j) = u_i * u_j;$$

5) solving:

$$\sum_{j=0}^{p} COV_u(i,j) h(j) = \delta(i)$$

$i = 0, ..., p$, with $\delta(1) = 0$, and

$\delta(i) = 0$ for $i = 1, ..., p$

6) computing $a(i) = h(i)/h(0)$ for $i = 0, ...., p$;

7) return to step 2) until desired convergence for values a(i);

8) stop.

**18.** A method according to claims 8 and 13, characterized in that p+1 coefficients a(0), a(1), ..., a(p) are computed by the following process:

1) selecting p+1 initial coefficients a(i);

2) computing the non-steady filter C from the precolorized self-correlation r(i), C being such that $CC^* \approx R$, R being the Toeplitz matrix formed from r(i);

3) using non-steady recursive filtering to compute the p+1 vectors $u_i$ such that: $u_i = C^{-1}y_i$ with $y_i = [y(p-i), ..., y(N-i)]^T$ for $i = 0$ to p;

4) computing the covariance matrix of $u_i$:

$$COV_u(i,j) = u_i * u_j;$$

5) solving:

$$\sum_{j=0}^{p} COV_u(i,j) h(j) = \delta(i)$$

$i = 0, ..., p$, with $\delta(1) = 0$, and

$\delta(i) = 0$ for $i = 1, ..., p$:

6) computing $a(i) = h(i)/h(0)$ for $i = 0, ..., p$;

7) return to step 2) until desired convergence for values a(i);

8) stop.

**19.** A method according to claims 2, 3, 6, 8, and 12 in combination, characterized in that it comprises the following steps:

1) the user determining a _zone_ of the f-k plane that contains the signal $y_0$ to be isolated;

2) for every value of the space variable _x_, perform the Fourier transform of the data y(t,x) of the time variable _t_ to obtain transformed data Y(f,x) in the f-x plane;

3) for each frequency _f_ in the f-x plane:

   3a) take

$$y(n) = Y(f,n);$$

3b) determine the ranges for the variable $\underline{k}$ containing the predictable signal $y_0$ that is to be isolated, by making a section of said zone at constant $\underline{f}$;

3c) compute the elementary space prediction error filter (variable $\underline{x}$) corresponding to each of these ranges in $\underline{k}$ for given $\varepsilon$;

3d) compute the overall prediction error filter a(i) and the corresponding precolorized self-correlation r(i);

3e) compute the non-steady prediction error filter ep(j,i) from the precolorized self-correlation r(i);

3f) compute the non-predictable portion e(n) of the data by non-steady recursive filtering using the coefficients ep(j,i);

3g) subtract the non-predictable portion e(n) from the data y(n) to obtain the predictable portion $y_0$(n) ;

3h) return to step 3a) for the following frequency $\underline{f}$ unless the last frequency of the f-x plane has been reached;

4) for all $\underline{x}$, perform the inverse Fourier transform of the variable $\underline{f}$ of e(n) or of $y_0$(n) to return to the t-x plane.

**20.** A method according to claims 2, 8, 12, 13, and 16, characterized in that it comprises the following steps:

1) for all $\underline{x}$, performing the Fourier transform of the seismic data y(t,x) for the variable $\underline{t}$ to transfer to the f-x plane;

2) for each frequency $\underline{f}$ in the f-x plane:

2a) take y(n) = Y(f,n) ;

2b) selecting a length $\underline{p}$ for the prediction error filter, a precolorizing factor $\varepsilon$, and a precolorizing filter b (0), ..., b(q), and also a number of iterations for convergence of a(i) ;

2c) computing:

$$u(n) \;=\; [\frac{y(n)}{c(i)}]$$

by up recursive filtering, c(i) being the damped prediction error filter of the preceding iteration (or of the last iteration of the preceding frequency if performing the first iteration for the frequency being iterated);

2d) computing the covariance matrix or the correlation of u(n);

2e) solving the system to obtain the coefficients a(i) of the prediction error filter;

2f) computing the precolorized self-correlation r(i) and the damped prediction error filter c(i);

2g) returning to 2c) until reaching the desired convergence of the values of a(i);

2h) obtaining the non-predictable portion e(n) of the data by non-steady recursive filtering;

2i) subtracting the non-predictable portion e(n) from the data y(n) to obtain the predictable portion $y_0$(n);

2j) returning to 2a) unless the last frequency has been reached;

3) for all $\underline{x}$ performing the inverse Fourier transform on $y_0$(n) for the variable $\underline{t}$ to obtain, $y_0$(t,x).

**21.** A method according to claim 1, applied to restoring data having missing values of index l(j), $\underline{j}$ lying in the range 1 to $\underline{m}$, the method being characterized in that it comprises the following steps:

1) initializing the data to be restored y(n) ;

2) computing the prediction error filter a(i) for the current y(n) ;

3) updating y(n) for the current a(i) :

3a) computing $\underline{m}$ vectors $d_j = Hp_j$ j = 1, ..., m; $p_j$ being the vector containing the impulse response of the jth pulse noise corresponding to the jth missing value of index l(j),

H being the linear operator such that M = $H^*$ H, M being the operator enabling the noise $\underline{e}$ to be computed form the data $\underline{y}$;

3b) computing the vector s = Hy;

3c) computing the matrix $\chi(i,j) = d_i^* d_j$ i = 1, ..., m;

3d) adding a prebleaching factor $\lambda^2$:

$$\chi(i,i) \leftarrow \chi(i,i) + \lambda^2 \qquad i = 1, ..., m;$$

3e) computing the vector of components $k(i) = d_i^* s$;

3f) solving the linear system of order $\underline{m}$:

$$\sum_{j=1}^{m} r(i,j)w(j) = k(i) \qquad\qquad i = 1, ..., m;$$

3g) updating y(n) as follows:

$$y \leftarrow y - \sum_{j=1}^{m} w(j)p_j$$

4) returning to 2) until reaching the desired convergence for a(i), else moving on to 5) ;

5) computing $\underline{u}$:

$$u = s - \sum_{j=1}^{m} w(j)d_j$$

6) computing $e = H^* u$;

7) computing $y_0 = y - e$.

**22.** A method according to claim 21, characterized in that for $p_j$, the components are taken of coherent noise of unknown amplitude.

**23.** A method according to claim 22, characterized in that the following is taken:

$p_i(n) = e^{jn\Delta xki(f)}$ with $n = 0, ..., N$, $k_i(f)$ being the dispersion relationship satisfied by the noise.

**24.** A method according to claim 21, characterized in that step 3) is replaced with following step 3'):

3') updating y(n) for the current a(i):

3a) initializing $y_{it}(n) = y(n)$;

3b) computing the non-predictable portion e(n) of $y_{it}(n)$ ;

3c) updating $y_{it}(n)$ for only those samples $\underline{n}$ that correspond to the missing values (n = l(j) for j = 1, ..., m) as follows:

$$y_{it}(n) \leftarrow (1 - \lambda^2)y_{it}(n) + \lambda^2 y(n) - e(n)$$

3d) returning to 3b) if the desired convergence for $y_{it}(n)$ has been reached, else moving on to 3e);

3e) updating y(n) for only those samples $\underline{n}$ that correspond to the missing values, as follows:

$$y(n) = y_{it}(n) .$$

**25.** A method according to claim 21, applied to restoring missing trace portions, characterized in that it comprises the following steps:

1) initializing data y(t,n);

2) using the Fourier transform to go from y(t,n) to Y(f,n) ;

3) updating a(f,i) :

    3a) for all $\underline{f}$:

        i) $y(n) = Y(f,n)$ ;
        ii) statistically computing the prediction error filter $a(f,i)$ for $y(n)$ and $i = 0, ..., p$;
        iii) initializing $Y_{it}(f,n) = Y(f,n)$ for all $\underline{n}$;
        iv) returning to 3a)i), or if last frequency, moving on to 4);

4) updating y[t,n] :

    4a) initializing $y_{it}(t,n) = y(t,n)$;
    4b) using the Fourier transform to go from $y_{it}(t,n)$ to $Y_{it}(f,n)$;
    4c) for all $\underline{f}$:

        i) $y_{it}(n) = Y_{it}(f,n)$;
        ii) computing the non-predictable portion $e(n)$ of $y_{it}(n)$ by means of the operator $M(f)$ computed from $a(f,i)$ already computed in 3c);
        iii) $E(f,n) = e(n)$;
        iv) returning to i) or moving on to 4d) if last frequency;

    4d) using the inverse Fourier transform to go from $E(f,n)$ to $e(t,n)$;
    4e) updating $y_{it}(t,n)$ for only those samples $(t,n)$ that correspond to the missing values as follows:

$$y_{it}(t,n) = (1 - \lambda^2)y_{it}(t,n) + \lambda^2 y(t,n) - e(t,n)$$

    4f) returning to 4b) or moving on to 4g) if $y_{it}(t,n)$ has converged as desired;
    4g) updating $y(t,n)$ as follows:

$$y(t,n) = y_{it}(t,n);$$

    5) returning to 2) or continuing to 6) if $a(f,i)$ has converged;
    6) obtaining reconstituted data $y(t,n)$ that can be separated into $y_0(t,n)$ and $e(t,n)$ in the ($f$-x) domain.

**26.** A method according to claim 1, applied to interpolating seismic data, characterized in that it includes the following steps, performed in the frequency domain:

    1) compute a prediction error filter $A(f)$ for the interpolated data;
    2) compute $Z(f)$ by applying the Fourier transform to the known data, which is assumed to be regularly spaced, setting to zero the missing data situated on a grid than is $\underline{m}$ times finer than the grid of known data, where $\underline{m}$ is the interpolation factor;
    3) construct the prediction error filter :

$$A_Z(f) = A(f + 1/m)\, A(f + 2/m)\, ...\, A(f + (m-1)/m)$$

    4) compute the interpolated data from which noise has not been removed as follows:

$$Y(f) = \frac{|A_z(f)|^2}{R_z(f)}\, Z(f)$$

    $R_z(f)$ being a precolorized self-correlation of $A_z(f)$.

**27.** A method according to claim 1, applied to interpolating seismic data, characterized in that it includes the following steps performed in the frequency domain:

1) compute a prediction error filter A(f) for the interpolated data;

2) compute Z(f) by applying the Fourier transform to the known data, which is assumed to be regularly spaced, setting to zero the missing data situated on a grid that is $\underline{m}$ times finer than the grid of known data, where $\underline{m}$ is the interpolation factor;

3) compute interpolated data from which noise has been removed as follows:

$$Y_0(f) = Z(f) - \frac{|A(f)|^2}{R(f)} Z(f)$$

**28.** A method according to claim 21, characterized in that the steps of claims 26 or 27 are implemented in the time domain.

1        ACQUISITION DES DONNEES
SISMIQUES
$y(n) = y_0(n) + e(n)$

2        CALCUL DU FILTRE
D'ERREUR DE PREDICTION
$A(f)$

3        APPLICATION AUX DONNEES
SISMIQUES DU FILTRE
D'ERREUR DE PREDICTION
AUTO-DECONVOLUE
$M(f) = D(f)\, A(f)$

4        OBTENTION DU SIGNAL
PREDICTIBLE $y_0(n)$
A ISOLER

## FIG.1

|A(F)|

-0,5                    0,05   0,15              0,5   F

FIG. 2

M(F)

0,5                    0,05   0,15              0,5   F

$\varepsilon = 10^{-2}$

FIG. 3A

M(F)

0,5                    0,05   0,15              0,5   F

$\varepsilon = 10^{-3}$

FIG. 3B

FIG. 4

FIG. 5

FIG_6

FIG. 7

ETAT DE LA TECHNIQUE

## FIG. 8
ETAT DE LA TECHNIQUE

FIG_9

FIG. 10

FIG. 11

FIG_12